# EUROPEAN PATENT APPLICATION

(11) **EP 4 852 595 A1**
(43) Date of publication of application: **09.12.2026**
(21) Application number: 24920822.4
(22) Date of filing: 30.01.2024
(51) Int. Cl.: H04W 74/0833

(54) **TRANSMISSION MODE SWITCHING METHOD AND APPARATUS, DEVICE, MEDIUM, AND PROGRAM PRODUCT**

(71) Applicant: Guangdong Oppo Mobile Telecommunications Corp., Ltd, Dongguan, Guangdong 523860 (CN)
(72) Inventor: LI, Haitao, Dongguan Guangdong 523860 (CN); HU, Yi, Dongguan Guangdong 523860 (CN)
(74) Representative: Novagraaf Technologies
(86) International application number: PCT/CN2024/074703
(87) International publication number: WO 2025/160747

(57) **Abstract**

The present application relates to the technical field of communications, and discloses a transmission mode switching method and apparatus, a device, a medium, and a program product. The method is performed by a terminal device in an idle state or an inactive state, and comprises: when a first condition is met, switching the transmission mode of first information from a first uplink transmission mode to a second uplink transmission mode, wherein the first uplink transmission mode or the second uplink transmission mode comprises: using a pre-configured PUSCH resource for transmission. Thus, in the case of a transmission failure of the first information, the transmission mode of the first information is switched to a different uplink transmission mode, so that the transmission possibility in an idle state or an inactive state is improved, increasing the success rate of uplink transmission in the idle state or the inactive state.

## Description

### TECHNICAL FIELD

The embodiments of the present application relate to the field of communication technology, and particularly to a method for switching transmission schemes, and an apparatus, a device, a medium and a program product thereof.

### RELATED ART

The Long Term Evolution (LTE) system supports a contention-based random access method, which includes message 1 (msg1), message 2 (msg2), message 3 (msg3), and message 4 (msg4).

In related arts, the terminal device needs to be in a connected state to transmit uplink information. However, when the terminal device is in an idle state or an inactive state, how to transmit uplink information with high reliability remains an urgent problem to be solved.

### SUMMARY

The present disclosure provides a method for switching transmission schemes, and an apparatus, a device, a medium, and a program product thereof. The technical solution at least includes the following contents.

According to one aspect of the embodiments of the present disclosure, a method for switching transmission schemes is provided. The method is performed by a terminal device in an idle state or an inactive state. The method includes: in a case where a first condition is met, switching a transmission scheme of first information from a first uplink transmission scheme to a second uplink transmission scheme; wherein the first uplink transmission scheme or the second uplink transmission scheme includes: transmitting using a pre-configured physical uplink shared channel (PUSCH) resource.

According to another aspect of embodiments of the present disclosure, a method for receiving information is provided. The method is performed by a network device and includes: receiving first information transmitted using a first uplink transmission scheme; receiving the first information transmitted using a second uplink transmission scheme; wherein the second uplink transmission scheme is determined by a terminal device in an idle state or an inactive state in a case where a first condition is met, and the first uplink transmission scheme or the second uplink transmission scheme includes: transmitting using a pre-configured PUSCH resource.

According to another aspect of embodiments of the present disclosure, an apparatus for switching transmission schemes is provided. The apparatus includes: a switching module, configured to switch a transmission scheme of first information from a first uplink transmission scheme to a second uplink transmission scheme in a case where a first condition is met; wherein the first uplink transmission scheme or the second uplink transmission scheme includes: transmitting using a pre-configured PUSCH resource.

According to another aspect of embodiments of the present disclosure, an apparatus for receiving information is provided. The apparatus includes: a receiving module, configured to receive first information transmitted using a first uplink transmission scheme; receive the first information transmitted using a second uplink transmission scheme; wherein the second uplink transmission scheme is determined by a terminal device in an idle state or an inactive state in a case where a first condition is met, and the first uplink transmission scheme or the second uplink transmission scheme includes transmitting using a pre-configured PUSCH resource.

According to another aspect of the embodiments of the present disclosure, a terminal device is provided. The terminal device includes: a processor; a transceiver connected to the processor; a memory for storing executable instructions of the processor; wherein the processor is configured to load and execute the executable instructions to perform the method for switching transmission schemes according to the above aspects.

According to another aspect of the embodiments of the present disclosure, a network device is provided. The network device includes: a processor; a transceiver connected to the processor; a memory for storing executable instructions of the processor; wherein the processor is configured to load and execute the executable instructions to perform the method for receiving information as described in the various aspects above.

According to another aspect of the embodiments of the present disclosure, a computer-readable storage medium is provided, in which at least one program is stored. The at least one program is loaded and executed by a processor to perform the method for switching transmission schemes or the method for receiving information as described in the above aspects.

According to another aspect of embodiments of the present disclosure, a chip is provided, which includes a programmable logic circuit and/or program instructions. When the chip operates on a terminal device or network device, the chip is used to perform the method for switching transmission schemes or the method for receiving information as described in the various aspects above.

According to another aspect of embodiments of the present disclosure, a computer program product or computer program is provided, which includes computer instructions stored in a computer-readable storage medium. The processor acquires the computer instructions from the computer-readable storage medium and executes them to perform the method for switching transmission schemes or the method for receiving information as described in the various aspects above.

The technical solutions according to the embodiments of the present disclosure may include the following beneficial effects.

In the case where the first condition is met, the terminal device in the idle state or the inactive state switches the transmission scheme of the first information from the first uplink transmission scheme to the second uplink transmission scheme; wherein the first uplink transmission scheme or the second uplink transmission scheme includes: using pre-configured PUSCH resources for transmission, so that in the case of transmission failure, different uplink transmission schemes are switched, thereby improving the transmission possibility in the idle state or the inactive state and increasing the success rate of uplink transmission in the idle state or the inactive state.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 illustrates a schematic diagram of a user plane transmission scheme for an early data transmission mechanism according to a related art;
FIG. 2 illustrates a schematic diagram of a contention-based random access process according to a related art;
FIG. 3 illustrates a schematic diagram of coverage enhancement levels according to a related art;
FIG. 4 illustrates a schematic diagram of a mobile communication system according to some embodiments of the present disclosure;
FIG. 5 illustrates a flowchart of a method for switching transmission schemes according to some embodiments of the present disclosure;
FIG. 6 illustrates a schematic diagram of a method for switching transmission schemes according to some embodiments of the present disclosure;
FIG. 7 illustrates a schematic diagram of a method for switching transmission schemes according to some embodiments of the present disclosure;
FIG. 8 illustrates a schematic diagram of a method for switching transmission schemes according to some embodiments of the present disclosure;
FIG. 9 illustrates a schematic diagram of a method for switching transmission schemes according to some embodiments of the present disclosure;
FIG. 10 illustrates a flowchart of a method for receiving information according to some embodiments of the present disclosure;
FIG. 11 illustrates a schematic diagram of a method for switching transmission schemes according to some embodiments of the present disclosure;
FIG. 12 illustrates a schematic diagram of a method for switching transmission schemes according to some embodiments of the present disclosure;
FIG. 13 illustrates a schematic diagram of a method for switching transmission schemes according to some embodiments of the present disclosure;
FIG. 14 illustrates a block diagram of an apparatus for switching transmission schemes according to some embodiments of the present disclosure;
FIG. 15 illustrates a block diagram of an apparatus for receiving information according to some embodiments of the present disclosure;
FIG. 16 illustrates a schematic structural diagram of a terminal device according to some embodiments of the present disclosure; and
FIG. 17 illustrates a schematic structural diagram of a network device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Here, exemplary embodiments will be described in detail, with examples illustrated in the accompanying drawings. When the following description refers to the drawings, unless otherwise indicated, the same numerals in different drawings represent the same or similar elements. The implementations described in the following exemplary embodiments do not represent all implementations consistent with the present disclosure. Instead, they are merely examples of devices and methods consistent with some aspects of the present disclosure as detailed in the appended claims.

The terms used in the present disclosure are solely for the purpose of describing specific embodiments and are not intended to limit the present disclosure. The use of the singular forms "a," "an," and "the" in the present disclosure and the accompanying claims is also intended to include the plural form, unless the context clearly indicates otherwise. It should also be understood that the term "and/or" as used herein refers to and encompasses any and all possible combinations of one or more of the associated listed items.

It should be understood that although the terms "first," "second," "third," and the like may be used herein to describe various pieces of information, such information should not be limited to these terms. These terms are only used to distinguish one type of information from another. For example, first information may also be referred to as second information, and similarly, second information is also referred to as first information, without departing from the scope of the present disclosure. The word "if," as used herein, may be interpreted as "in a case where," " in a case when," or "in response to determining that," depending on the context.

The technical solutions described in some embodiments of the present disclosure can be applied to various communication systems, such as the Global System of Mobile Communication (GSM) system, the Code Division Multiple Access (CDMA) system, the Wideband Code Division Multiple Access (WCDMA) system, the General Packet Radio Service (GPRS), the Long Term Evolution (LTE) system, the Advanced Long Term Evolution (LTE-A) system, the New Radio (NR) system, the evolved system of the NR system, the LTE-based access to unlicensed spectrum (LTE-U) system, the NR-based access to unlicensed spectrum (NR-U) system, the Non-Terrestrial Network (NTN) system, the Universal Mobile Telecommunication System (UMTS), the Wireless Local Area Network (WLAN), Wireless Fidelity (Wi-Fi), the 5th-Generation (5G) system, the cellular Internet of Things (IoT) system, the cellular passive IoT system, as well as the subsequent evolved system of the 5G NR system, and the evolved systems of 6G and beyond.

It should be understood that in some embodiments of the present disclosure, "5G" may also be referred to as "5G NR" or "NR".

It should be understood that in the description of embodiments of the present disclosure, the term "correspond" may indicate a direct or indirect corresponding relationship between two items, or may indicate an associated relationship between two items; and may also indicate relationships such as indicating and being indicated, or configuring and being configured.

In the embodiments of the present disclosure, "predefinition" can be achieved by pre-storing corresponding codes, tables, or other means that can be used to indicate relevant information in devices (e.g., including the terminal device and the network device). The specific implementation method is not limited in the present disclosure. For example, predefinition can refer to what is defined in a protocol.

In the embodiments of the present disclosure, the term "protocol" refers to a standard or a protocol in the communication field, including, for example, the LTE protocol, the NR protocol, and related protocols applied in the future communication systems, which is not limited in the present disclosure.

**Next, Early Data Transmission (EDT) is introduced,**

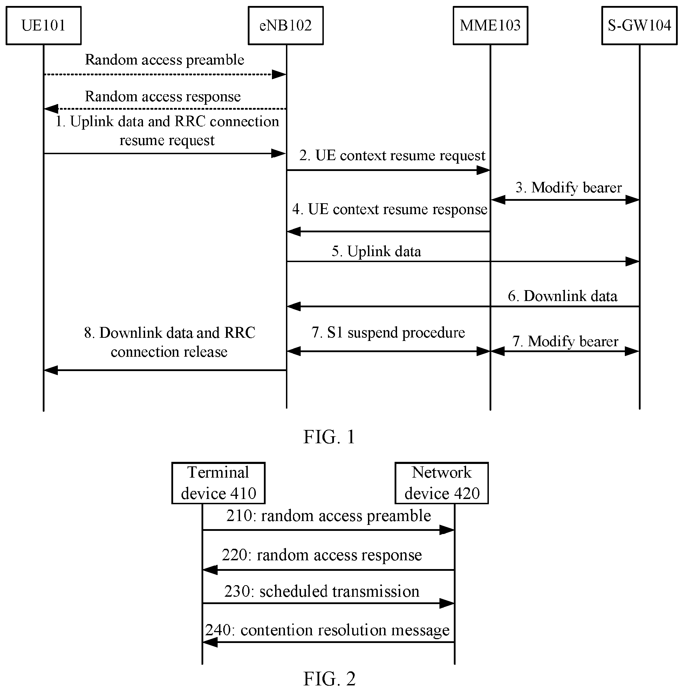

The EDT mechanism is introduced in the LTE system. During this process, the terminal device may remain in idle state, suspend state, or inactive state to complete the transmission of small data packets in uplink and/or downlink. For example, the schematic diagram of the user plane transmission scheme is illustrated in FIG. 1.

Taking the example where the terminal device is a User Equipment (UE) 101 and the network device is an Evolved Node B (eNB) 102, after the UE 101 transmits a Random Access Preamble to the eNB 102, the eNB 102 feeds back a Random Access Response to the UE 101.

**Step 1**: the UE 101 transmits uplink data and a radio resource control (RRC) connection resume request (RRCConnectionResumeRequest) to the eNB 102. The RRC connection resume request includes at least one of: a resume identifier (resumeID), a resume cause (resumeCause), a short resume medium access control integrity check (shortResume MAC-I).

**Step 2**: the eNB 102 transmits a UE Context Resume Request to the Mobility Management Entity (MME) 103.

**Step 3**: A bearer modification process is performed between the MME103 and a Serving Gateway (S-GW) 104, including: the MME 103 transmits a Modify Bearer Request to the S-GW 104, and the S-GW 104 transmits a Modify Bearer Response to the MME 103.

**Step 4**: the MME 103 transmits a UE Context Resume Response to the eNB 102.

**Step 5**: the eNB 102 transmits uplink data to the S-GW 104.

**Step 6**: the S-GW 104 transmits downlink data to the eNB 102.

**Step 7**: An S1 Suspend procedure is performed between the eNB 102 and the MME 103, and the Modify Bearer procedure is performed between the MME 103 and the Serving Gateway (S-GW) 104, including: the eNB102 transmits an S1 Suspend Request to the MME 103, the MME 103 transmits the Modify Bearer Request to the S-GW 104, the S-GW 104 transmits the Modify Bearer Response to the MME 103, and the MME 103 transmits an S1 Suspend Response to the eNB 102.

**Step 8**: the eNB 102 transmits downlink data and RRC Connection Release (RRCConnecionRelease) to the UE 101. The RRC Connection Release includes at least one of: releaseCause, resumeID, Next Hopping Chain Count (NCC).

For the aforementioned data transmission process, the terminal device does not enter the connected state, but instead remains in the idle state, suspended state, or inactive state to complete the transmission of small data packets.

In terms of configuration, the network device will configure a maximum transport block size (TB size) allowed for transmission in the current network on System Information Block Type 2 (SIB2). The terminal device determines the data volume to be transmitted. If the data volume is less than the maximum TB size, the terminal device can use EDT; otherwise, the terminal device uses the normal connection establishment process to enter the connected state for data transmission.

**Next, the contention-based random access process is introduced.**

The terminal device supports the contention-based random access process. FIG. 2 illustrates a schematic diagram of the contention-based random access process according to the related art, which includes the following steps.

**Step 210**: the terminal device 410 transmits message 1 (msg1) to the network device 420: the random access preamble.

The terminal device 410 transmits the selected random access preamble on the time-frequency resource of the selected Physical Random Access Channel (PRACH). Based on the random access preamble, the network device 420 can estimate the uplink delay and the grant size required for the terminal device 410 to transmit the message 3.

**Step 220**: The network device 420 transmits the message 2 (msg2) to the terminal device 410: Random Access Response (RAR).

After the terminal device 410 transmits the message 1 (msg1), a random access response window (RAR window) is opened, within which the physical downlink control channel (PDCCH) is monitored. This PDCCH is scrambled with a random access radio network temporary identifier (RA-RNTI).

After successfully detecting the RA-RNTI scrambled PDCCH, the terminal device 410 can acquire the physical downlink shared channel (PDSCH) scheduled by the PDCCH, wherein the PDSCH includes the RAR.

The RAR includes: Backoff Indicator (BI), used to indicate the backoff time for retransmission of the message 1; Random Access Preamble Identifier (RAPID), used to indicate the random access preamble; Timing Advance Group (TAG), used to adjust the uplink timing; Uplink Grant, being the uplink resource indication for scheduling the message 3; Temporary Cell-Radio Network Temporary Identity (Temporary C-RNTI), used to scramble the PDCCH of the message 4 (initial access).

**Step 230**: The terminal device 410 transmits the message 3 (msg3) to the network device 420: Scheduled Transmission (ST).

The message 3 is primarily used to notify the network device 420 of the event triggering the random access procedure. For example, if the event is an initial access random procedure, the message 3 will carry the terminal device identifier (IDentification, ID) and the establishment cause; if the event is a radio resource control (RRC) reestablishment, it will carry the connected terminal device ID and the establishment cause. Meanwhile, the terminal device ID or connected terminal device ID carried in the message 3 can enable the competition conflict to be resolved in step 240.

**Step 240**: the network device 420 transmits a message 4 (msg4) to the terminal device 410: a contention resolution message.

The message 4 serves two purposes. Firstly, the message 4 can be utilized to resolve contention conflicts. Secondly, the message 4 is a message transmitted by the network device 420 to the terminal device 410 for RRC configuration.

Contention conflict resolution refers to the terminal device 410 receiving the PDSCH of the message 4 and performing scheduling by matching the Common Control Channel Signal Distribution Unit (CCCH SDU) in the PDSCH. There are two scheduling schemes:
1. if the terminal device 410 carries a temporary C-RNTI in the message 3, then the message 4 is scheduled using the PDCCH scrambled with the temporary C-RNTI;
2. if the terminal device 410 does not carry a temporary C-RNTI in the message 3, for example, the random access process is an initial access, then the message 4 is scheduled using a PDCCH scrambled with the temporary C-RNTI.

**Next, the Coverage Enhancement Level (CE level) is introduced.**

In a related art, such as narrow band internet of things (NB-IoT), there are three CE levels: level 0, level 1, and level 2, which correspond to signal attenuation resistance of 144 dB, 154 dB, and 164 dB, respectively. The network device and the terminal device will select the corresponding information retransmission number based on the CE level corresponding to the terminal device.

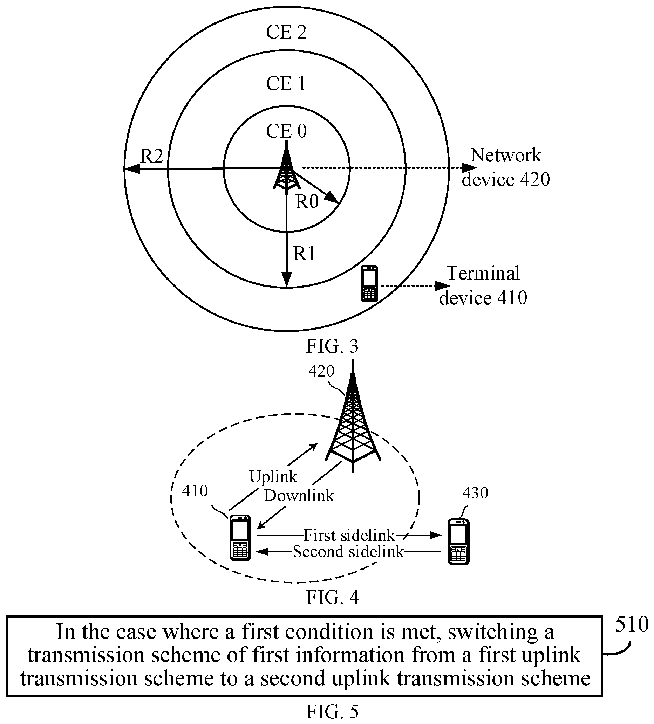

FIG. 3 illustrates a schematic diagram of coverage enhancement levels according to the related art. Centered around the network device 420, the first signal coverage range within a distance R0 from the network device 420 corresponds to the CE level 0 (CE 0), the second signal coverage range between the distance R0 and a distance R1 from the network device 420 corresponds to CE level 1 (CE 1), and the third signal coverage range between the distance R1 and a distance R2 from the network device 420 corresponds to CE level 2 (CE 2). When the distance from the network device 420 exceeds R2, the signal quality is too poor and does not correspond to a CE level.

The terminal device determines the CE level based on the reference signal received power (RSRP) measurement result and the RSRP threshold configured by the network device. For example, the network device configures three RSRP thresholds, RSRP1, RSRP2, and RSRP3, where RSRP1 > RSRP2 > RSRP3. When RSRP ≥ RSRP1, the corresponding CE level of the terminal device is the level 0; when RSRP2 ≤ RSRP < RSRP1, the corresponding CE level of the terminal device is the level 1; when RSRP3 ≤ RSRP < RSRP2, the corresponding CE level of the terminal device is the level 2; when RSRP < RSRP3, the reference signal quality is too low, and no corresponding CE level.

Illustratively, when the terminal device 410 is in the position illustrated in FIG. 3, by comparing the RSRP measurement result with the RSRP threshold value, it is determined that the CE level is Level 2, which can withstand a signal attenuation of 164 dB.

**Next, Preconfigured Uplink Resource (PUR) is introduced.**

To further save energy, the LTE system supports PUR transmission. The PUR is a dedicated uplink resource that is allocated to the terminal device by the network equipment during connection release. The PUR does not require the use of random access procedures, and the PUR is a UE-specific resource, eliminating contention and interference in terminal devices using PUR resources.

FIG. 4 illustrates a schematic diagram of a mobile communication system according to some embodiments of the present disclosure. The mobile communication system includes a terminal device 410 and a network device 420, and may or may not include a terminal device 430, which is not limited by the present disclosure.

In the present disclosure, the terminal device 410, also referred to as a UE, an access terminal, a subscriber unit, a subscriber station, a mobile station, a mobile site, a remote station, a remote terminal, a mobile device, a user terminal, a terminal, a wireless communication device, a user agent, or a user device, includes but is not limited to: a handheld device, a wearable device, an in-vehicle device, and an Internet of Things (IoT) device, such as a mobile phone, a tablet computer, an e-book reader, a laptop computer, a desktop computer, a television, a game console, a Mobile Internet Device (MID), an Augmented Reality (AR) terminal, a Virtual Reality (VR) terminal, a Mixed Reality (MR) terminal, an Extended Reality (XR) terminal, a Baffle Reality (BR) terminal, a Cinematic Reality (CR) terminal, a Deceive Reality (DR) terminal, a wearable device, a gamepad, an electronic tag, a controller, a wireless terminal in Industrial Control, a wireless terminal in Self Driving, a wireless terminal in Remote Medical, a wireless terminal in Smart Grid, a wireless terminal in Transportation Safety, a wireless terminal in Smart City, a wireless terminal in Smart Home, a wireless terminal in Remote Medical Surgery, a cellular phone, a cordless phone, a Session Initiation Protocol (SIP) phone, a Wireless Local Loop (WLL) station, a Personal Digital Assistant (PDA), a Set Top Box (STB), Customer Premise Equipment (CPE), or the like.

The network device 420 in the present disclosure provides wireless communication functions, and includes but is not limited to: an Evolved Node B (eNB), a Radio Network Controller (RNC), a Node B (NB), a Base Station Controller (BSC), a Base Transceiver Station (BTS), a Home Evolved Node B (or Home Node B, HNB), a BaseBand Unit (BBU), an Access Point (AP) in a Wireless Fidelity (Wi-Fi) system, a wireless relay node, a wireless backhaul node, a Transmission Point (TP), or a Transmission and Reception Point (TRP), or the like. It can also be a Next Generation Node B (gNB) or Transmission Point (TRP or TP) in the 5th Generation (5G) mobile communication system, or one or a group of antenna panels (including a plurality of antenna panels) of a base station in the 5G system, or a network node constituting a gNB or transmission point, such as a BaseBand Unit (BBU) or Distributed Unit (DU), or the like. It can also refer to a base station in the Beyond Fifth Generation (B5G) or 6th Generation (6G) mobile communication systems, or the network device 420 is a core network (CN), fronthaul, backhaul, radio access network (RAN), network slicing, etc., or the serving cell, primary cell (PCell), primary secondary cell (PSCell), special cell (SpCell), secondary cell (SCell), neighbor cell, etc. of a terminal device.

In some embodiments, the network device 420 and the terminal device 410 communicate with each other through a certain air interface technology, such as the Uu interface.

Illustratively, there are two communication scenarios between the network device 420 and the terminal device 410: an uplink communication scenario and a downlink communication scenario. The uplink communication, also referred to as uplink transmission, refers to transmitting signals or data to the network device 420; and the downlink communication, also referred to as downlink transmission, refers to transmitting signals or data to the terminal device 410.

In some embodiments, the terminal device 410 and the terminal device 430 communicate with each other via an air interface technology, such as a PC5 interface.

Illustratively, there are two communication scenarios between the terminal device 410 and the terminal device 430: a first sidelink communication scenario and a second sidelink communication scenario. The first sidelink communication refers to the terminal device 410 transmitting signals to the terminal device 430; and the second sidelink communication refers to the terminal device 430 transmitting signals to the terminal device 410.

In some embodiments, both the terminal device 410 and the terminal device 430 are within the network coverage and located in the same cell, or both the terminal device 410 and the terminal device 430 are within the network coverage but located in different cells, or the terminal device 410 is within the network coverage but the terminal device 430 is outside the network coverage.

In some embodiments of the present disclosure, "NR" may also be referred to as a 5G NR system or a 5G system. The 5G mobile communication system may include a non-stand alone (NSA) network and/or a stand alone (SA) network.

The technical solutions according to the embodiments of the present disclosure can also be applied to Machine Type Communication (MTC), Long Term Evaluation-Machine (LTE-M), Device to Device (D2D) networks, Machine to Machine (M2M) networks, Internet of Things (IoT) networks, or other networks. The IoT networks can include, for example, the Internet of Vehicles (IoV). The communication modes in the IoV system are collectively referred to as Vehicle to X (V2X, where X can represent anything), such as Vehicle to Vehicle (V2V) communication, Vehicle to Infrastructure (V2I) communication, Vehicle to Pedestrian (V2P) communication, or Vehicle to Network (V2N) communication.

The mobile communication system according to the embodiments of the present disclosure can be applied to, but is not limited to, at least one of the following communication scenarios: uplink communication scenario, downlink communication scenario, and sidelink communication scenario.

The contention-based random access method includes message 1 (msg1), message 2 (msg2), message 3 (msg3), and message 4 (msg4). In related arts, the terminal device needs to be in the connected state to transmit uplink information. However, how to reliably transmit uplink information when the terminal device is in the idle state or the inactive state remains an urgent issue to be addressed.

To address the aforementioned issues, embodiments of the present disclosure provide a method for switching transmission schemes. FIG. 5 illustrates a flowchart of the method for switching transmission schemes according to some embodiments of the present disclosure. The method is performed by a terminal device in an idle state or an inactive state. The method includes:
**step 510**: in a case where a first condition is met, switching a transmission scheme of first information from a first uplink transmission scheme to a second uplink transmission scheme.

The first uplink transmission scheme or the second uplink transmission scheme includes: transmitting using a pre-configured PUSCH resource.

In some embodiments, transmission can be understood as at least one of direct transmission, direct transmission of message 3, transmission without scheduling, transmission without message 1, transmission without RAR, transmission without transmitting message 1, transmission without receiving RAR. The message 1 refers to the message 1 in the random access process, and the RAR refers to the message 2 in the random access process.

In some embodiments, the transmission using the pre-configured PUSCH resource can be understood as utilizing at least one of: contention-based PUSCH resource transmission, direct transmission using message 3, PUSCH resource transmission without requiring message 1, PUSCH resource transmission without requiring RAR.

In some embodiments, the first condition can be understood as at least one of switching condition, conversion condition, transition condition, or fallback condition.

In some embodiments, the reliability of the second uplink transmission scheme is higher than that of the first uplink transmission scheme.

In some embodiments, in the case of the same data volume, the uplink resource used by the second uplink transmission scheme is superior to or more than that used by the first uplink transmission scheme.

In some embodiments, both the first uplink transmission scheme and the second uplink transmission scheme are direct transmission schemes for terminal devices in the idle state or the inactive state, without requiring message 1 and/or RAR.

In some embodiments, the PUSCH resource is a contention-based PUSCH resource. For instance, in the contention-based random access mechanism, the PUSCH resource is utilized for transmitting the message 3 (msg3); and, in another example, in a direct transmission mechanism for the message 3, the PUSCH resource is the resource used for directly transmitting the message 3.

In some embodiments, the first information includes first signaling; alternatively, the first information includes both the first signaling and first data.

In some embodiments, the first signaling includes at least one of: RRC Connection Setup Request (RRCSetupRequest), RRC Connection Resume Request (RRCConnectionResumeRequest), Early Data Request (EarlyDataRequest).

The RRC connection establishment request is used to request the establishment of an RRC connection. The terminal device transmits the RRC connection establishment request to the network device to initiate the connection process; the RRC connection resume request is used to request the resumption of an RRC connection. When the terminal device is in a non-connected state and needs to resume the connection, the terminal device transmits this request to the network device; the early data request is used to request partial data transmission before the completion of RRC connection establishment, in order to improve connection speed and optimize transmission performance.

In some embodiments, the first uplink transmission scheme and the second uplink transmission scheme include at least one of the following three scenarios.

**The first scenario**: The first uplink transmission scheme includes transmitting using a pre-configured PUSCH resource of a first type; and the second uplink transmission scheme includes transmitting using a pre-configured PUSCH resource of a second type.

**The second scenario**: The first uplink transmission scheme includes using a PUR transmission; and the second uplink transmission scheme includes transmitting using a pre-configured PUSCH resource.

**The third scenario**: The first uplink transmission scheme includes transmitting using a pre-configured PUSCH resource; and the second uplink transmission scheme includes transmitting using an EDT resource.

In some embodiments, PUSCH resources (including the PUSCH resource of the first type and the PUSCH resource of the second type) are resources configured by the network device.

**For the first scenario: the first uplink transmission scheme includes transmitting using the pre-configured PUSCH resource of the first type; and the second uplink transmission scheme includes transmitting using the pre-configured PUSCH resource of the second type.**

In some embodiments, the first condition includes: the number of times the terminal device transmits the first information reaches a first transmission count, wherein the first transmission count is the maximum transmission attempt count corresponding to the PUSCH resource of the first type.

In the case where the number of times the first information is transmitted by the terminal device reaches the first transmission count, the transmission scheme of the first information is switched from using the pre-configured PUSCH resource of the first type to using the pre-configured PUSCH resource of the second type.

Due to contention in the terminal devices in the transmission mechanism using PUSCH resources (such as the direct transmission mechanism of message 3), allowing a plurality of retransmissions can improve the probability of resolving contention conflicts.

In some embodiments, the first transmission count is configured by the network device.

Configuring the first transmission count through the network device allows for a variety of configuration methods, enabling configuration based on actual needs.

In some embodiments, the maximum transmission attempt count (the maximum retransmission times) include the initial transmission. For example, if the initial transmission fails and the maximum transmission attempt count is 4, then a maximum of 3 more retransmissions can be performed. In the embodiments of the present disclosure, the example where the maximum transmission attempt count include the initial transmission is used for illustration.

In some embodiments, the maximum transmission attempt count does not include the initial transmission. For instance, if the initial transmission fails and the maximum transmission attempt count is set to 4, then a maximum of 4 more retransmissions can be performed. At this point, the maximum transmission attempt count can be interpreted as the maximum number of retransmission attempt count.

In some embodiments, a first repetition count is less than a second repetition count. The first repetition count is the repetition count corresponding to the PUSCH resource of the first type, while the second repetition count is the repetition count corresponding to the PUSCH resource of the second type.

Illustratively, a transmission or a retransmission includes repetitions of the same information. The repetition count refers to the number of times the same information is repeated in a transmission or retransmission. For example, if the string to be transmitted is 0110 and the repetition count is 3, then the transmitted string will be 011001100110.

Due to the potential continuous degradation in channel quality in the terminal device caused by various factors, such as the degradation in channel quality resulting from satellite provision in Non-Terrestrial Network (NTN) scenarios, utilizing the PUSCH resource with correspondingly more repetition times for transmission can enhance the success rate of transmission.

In some embodiments, the method further includes: retransmitting the first information in a case of a failure in transmitting the first information using the preconfigured PUSCH resource of the first type.

Possible scenarios for the failure in transmitting the first information include at least one of the following: the first timer expires; the network device indicates that the transmission of the first information fails or terminates; the transmission of the first information is interfered by other devices; a plurality of devices attempt to transmit the first information simultaneously.

In some embodiments, the first timer is a timer initiated by the terminal device when transmitting the first information using the PUSCH resource of the first type, and the first timer is used to limit the time for transmitting the first information.

In some embodiments, the first information is retransmitted if the first timer expires.

Illustratively, the first timer limits the time for transmitting the first information to 100 milliseconds, starting from the moment when the terminal device starts transmitting the first information using the PUSCH resource of the first type. If the first timer exceeds 100 milliseconds, the first information is retransmitted.

By using the timer to determine whether the transmission of the first message fails, the implementation is simple and easy to control.

In some embodiments, the method further includes: in a case of a failure in the i^{th} retransmission, performing the (i+1)^{th} retransmission until the transmission count of the first information reaches the first transmission count; wherein the first transmission count is the maximum transmission attempt count corresponding to the PUSCH resource of the first type, and i is a positive integer.

By retransmitting the first information in the case of the failure in transmitting the first information, and continuing to retransmit the first information in the case of the failure in the retransmission, until the number of times the first information is transmitted reaches the first transmission count, the transmission success rate of the first information is improved.

In some embodiments, the PUSCH resource of the first type is associated with the first CE level, and the PUSCH resource of the second type is associated with the second CE level.

There are three levels of CE: level 0, level 1, and level 2, which correspond to signal attenuation resistance of 144 dB, 154 dB, and 164 dB, respectively. The number of times of information repetition between the network device and the terminal device will be determined based on the CE level corresponding to the terminal device.

In some embodiments, the first CE level is determined by the terminal device based on the measurement result of reference signal received power (RSRP) and the RSRP threshold configured by the network device; or the first CE level is the CE level specified by the network device during RRC connection release.

In some embodiments, the terminal device acquires the signal quality of the Cell-specific Reference Signal (CRS) by measuring the CRS, wherein the measurement result of the CRS is represented by RSRP.

Illustratively, the network device configures three RSRP threshold values, i.e., RSRP1, RSRP2, and RSRP3, wherein RSRP1 > RSRP2 > RSRP3. When RSRP ≥ RSRP1, the CE level corresponding to the terminal device is the level 0; when RSRP2 ≤ RSRP < RSRP1, the CE level corresponding to the terminal device is the level 1; when RSRP3 ≤ RSRP < RSRP2, the CE level corresponding to the terminal device is the level 2; when RSRP < RSRP3, the reference signal quality is too low, and no corresponding CE level.

When the first CE level is determined by the terminal device based on the RSRP measurement result and the RSRP threshold configured by the network device, the first CE level is more consistent with the scenario in which the terminal device is located, resulting in higher accuracy. When the first CE level is the CE level specified by the network device during RRC connection release, the CE level can be specified based on actual needs, without the need for RSRP measurement.

In some embodiments, the second CE level is the CE level acquired by adding a preset level to the first CE level; or the second CE level is the CE level determined by the terminal device based on the RSRP measurement result and the RSRP threshold configured by the network device.

In some embodiments, the second CE level is one level higher than the first CE level, for example, if the first CE level is the level 1, the second CE level is the level 2; or the second CE level is two levels higher than the first CE level, with an upper limit of the level 2, for example, if the first CE level is the level 0, the second CE level is the level 2, or if the first CE level is the level 1, the second CE level is the level 2.

In some embodiments, the second CE level is determined by the terminal device based on the current RSRP measurement result and the RSRP threshold value configured by the network device. The determination method is referred to above and will not be elaborated here.

When the second CE level is the CE level acquired by adding the preset level to the first CE level, RSRP measurement is not required, making implementation simple. When the second CE level is determined by the terminal device based on the RSRP measurement result and the RSRP threshold configured by the network device, the second CE level is more consistent with the scenario in which the terminal device is located, resulting in higher accuracy.

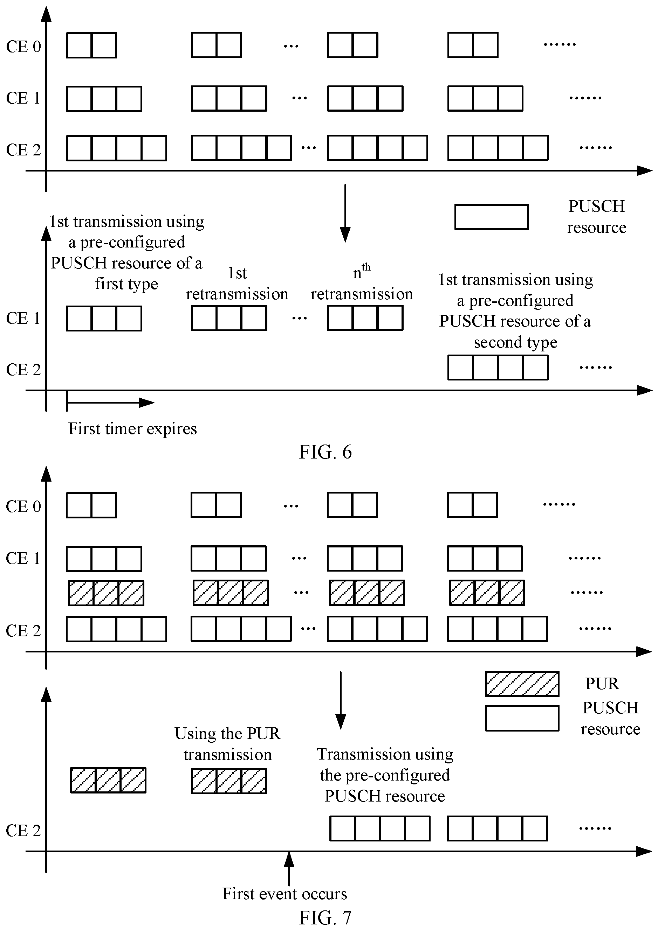

FIG. 6 illustrates a schematic diagram of a method for switching transmission schemes according to some embodiments of the present disclosure. The network device is pre-configured with a plurality of PUSCH resources, wherein the repetition count for the PUSCH resource corresponding to CE level 0 (CE 0) is 2, meaning that the first message is transmitted once and then repeated once; the repetition count for the PUSCH resource corresponding to CE level 1 (CE 1) is 3, meaning that the first message is transmitted once and then repeated twice; and the repetition count for the PUSCH resource corresponding to CE level 2 (CE 2) is 4, meaning that the first message is transmitted once and then repeated three times. The periods of PUSCH resources corresponding to different CE levels may be the same or different. In the embodiments of the present disclosure, the case where the periods are the same is taken as an example for illustration.

Taking the example where the maximum transmission attempt count corresponding to the pre-configured PUSCH resource of the first type includes the initial transmission, the maximum transmission attempt count is n+1 times, and the repetition count (first repetition count) is 3, that is, after transmitting the first message, the first message is repeated twice. Here, n is a positive integer.

In the case of a failure in the initial transmission using the pre-configured PUSCH resource of the first type, such as when the first timer expires, the 1^{st} retransmission is performed. After the 1^{st} retransmission fails, the 2^{nd} retransmission is performed until the n^{th} retransmission is performed, then the transmission is switched to using the pre-configured PUSCH resource of the second type. The number of repetitions (second repetition count) corresponding to the PUSCH resource of the second type of is 4, which is greater than the first repetition count.

**For the second scenario: the first uplink transmission scheme includes using the PUR transmission; and the second uplink transmission scheme includes transmitting using the pre-configured PUSCH resource.**

In some embodiments, the first condition includes: occurrence of a first event.

FIG. 7 illustrates a schematic diagram of a method for switching transmission schemes according to some embodiments of the present disclosure. The network device pre-configures a plurality of PUSCH resources and PURs, where white squares indicate PUSCH resources and shaded squares indicate PURs. The periods of PUSCH resources corresponding to different CE levels may be the same or different, and in the embodiments of the present disclosure, the case where the periods are the same is taken as an example for illustration.

Illustratively, taking the example of PUSCH resources corresponding to CE level 2 (CE 2), the repetition count is 4, meaning that after transmitting the first message, the first message is repeated three times. In the case where the first event occurs, the transmission scheme of the first information is switched from using the PUR transmission to using the pre-configured PUSCH resource for transmission.

In some embodiments, the first event includes at least one of the following: the second timer expires; the network device indicates the failure of the PUR transmission; the network device indicates the termination of the PUR transmission; wherein the second timer is used to limit the time for PUR transmission.

In some embodiments, the network device indicates the failure or termination of the PUR transmission through configuration indication signaling, wherein the indication signaling includes at least one of the physical downlink control channel (PDCCH), the medium access control control element (MAC CE), RRC signaling.

In the case where the first event occurs, the transmission scheme is switched. For instance, in the case where the first event is that the second timer expires, the implementation is simple and easy to control. In the case where the first event is that the network device indicates the failure or transmission of the PUR transmission, the switching is performed based on the indication signaling, ensuring accurate operation without the need to introduce other mechanisms.

In some embodiments, the pre-configured PUSCH resource is associated with a fourth CE level.

In some embodiments, the fourth CE level is a CE level determined by the terminal device based on the RSRP measurement result and the RSRP threshold configured by the network device. For specific implementation details, please refer to the embodiments of the first scenario, which will not be elaborated here.

In some embodiments, the second timer is a timer initiated by the terminal device when using the PUR transmission, and the second timer is used to limit the time of PUR transmission. The principle of using the second timer is the same as that of the first timer, and will not be elaborated here.

The failure of the PUR transmission may be due to degradation of channel quality, and the PUR configured by the network device cannot adapt to the degraded channel quality. In this case, fallback to using the PUSCH resource for transmission (such as direct transmission of message 3) is recommended. The PUSCH resource transmission mechanism can select the PUSCH resource that is compatible with the channel quality, thereby improving the transmission success rate.

**For the third scenario: the first uplink transmission scheme includes transmitting using the pre-configured PUSCH resource; and the second uplink transmission scheme includes transmitting using the EDT resource.**

In some embodiments, the first condition includes: occurrence of a second event.

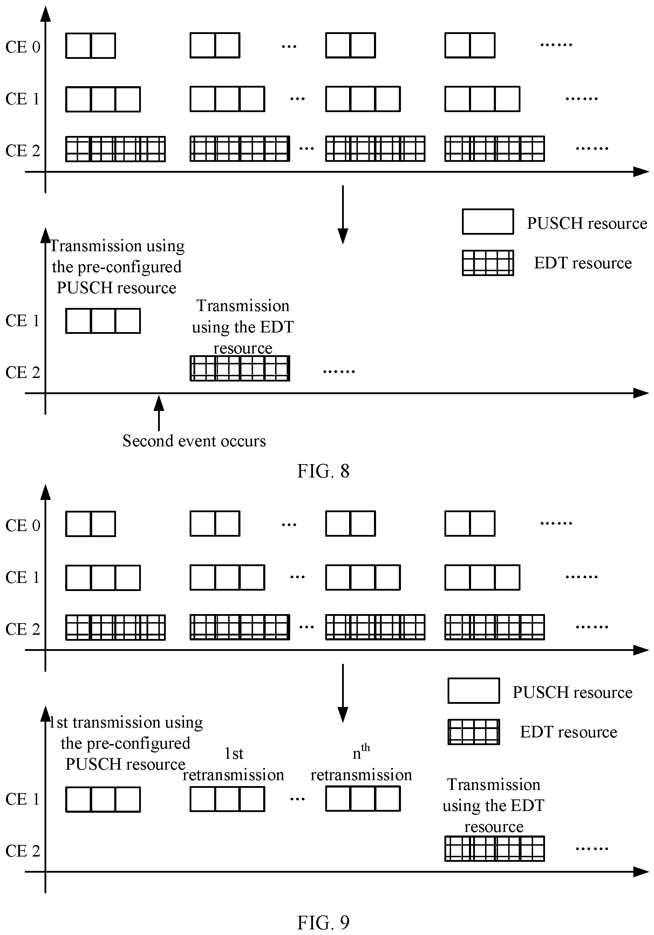

FIG. 8 illustrates a schematic diagram of a method for switching transmission schemes according to some embodiments of the present disclosure. The network device pre-configures a plurality of PUSCH resources and EDT resources, where white squares indicate PUSCH resources and squares filled with crosshatching indicate EDT resources. The periods of PUSCH resources corresponding to different CE levels may be the same or different, and in the embodiments of the present disclosure, the case where the periods are the same is taken as an example for illustration.

Illustratively, taking the example of the PUSCH resource corresponding to CE level 1 (CE 1), the repetition count is 3, meaning that after transmitting the first message, the first message is transmitted twice. In the case where the second event occurs, the transmission scheme of the first message is switched from using the preconfigured PUSCH resource for transmission to using the EDT resource for transmission.

In some embodiments, the second event includes at least one of the following: the third timer expires; the network device indicates that the transmission of the first information fails; the network device indicates that the transmission of the first information terminates; the number of times the first information has been transmitted reaches a second transmission count; wherein the third timer is used to limit the time for transmitting the first information, and the second transmission count is the maximum transmission attempt count corresponding to the PUSCH resource.

In the case where the second event occurs, the transmission scheme is switched. For example, in the case where the second event is that the third timer expires, the implementation is simple and easy to control. In the case where the second event is that the network device indicates that the transmission of the first information fails or terminates, the switching is performed based on the indication signaling, with accurate operation and no need to introduce other mechanisms. In the case where the second event is that the number of times the first information is transmitted reaches the second transmission count, it is easy to monitor, and in the case where the number of times the first information is transmitted has reached the maximum transmission attempt count, the first information is likely to fail to be transmitted, which meets the timing for switching the transmission scheme.

Taking the example where the second event is that the number of times the first information is transmitted reaches the second transmission count, as illustrated in FIG. 9, the maximum transmission attempt count corresponding to the pre-configured PUSCH resource includes the initial transmission, and the maximum transmission attempt count is n+1 times, where n is a positive integer.

In the case of a failure in the 1^{st} transmission using the pre-configured PUSCH resource, the 1^{st} retransmission is performed. After the 1^{st} retransmission fails, the 2^{nd} retransmission is performed until the n^{th} retransmission is performed, then the transmission is switched to using the EDT resource.

In some embodiments, the second transmission count is configured by the network device.

Configuring the second transmission count through the network device enables diverse configuration methods, allowing for configuration based on actual needs.

In some embodiments, the third timer is a timer initiated by the terminal device when transmitting the first information using the pre-configured PUSCH resource. The third timer is used to limit the time for transmitting the first information. The principle of using the third timer is the same as that of the first timer, and will not be elaborated here.

In some embodiments, the EDT resource is associated with a third CE level.

In some embodiments, the third CE level is a CE level determined by the terminal device based on the RSRP measurement result and the RSRP threshold configured by the network device; alternatively, the third CE level is a CE level associated with the last transmission of the first information in the case of the failure in transmitting the first information; alternatively, the third CE level is a CE level acquired by adding a preset level to the CE level associated with the last transmission of the first information in the case of the failure in transmitting the first information.

In some embodiments, the terminal device measures the CRS to acquire the signal quality of the CRS, and the measurement result of the CRS is represented by RSRP.

Illustratively, the network device configures three RSRP threshold values, i.e., RSRP1, RSRP2, and RSRP3, wherein RSRP1 > RSRP2 > RSRP3. When RSRP ≥ RSRP1, the CE level corresponding to the terminal device is the level 0; when RSRP2 ≤ RSRP < RSRP1, the CE level corresponding to the terminal device is the level 1; when RSRP3 ≤ RSRP < RSRP2, the CE level corresponding to the terminal device is the level 2; when RSRP < RSRP3, the reference signal quality is too low, and no corresponding CE level.

In some embodiments, in the case of the failure in transmitting the first information, the CE level associated with the last transmission of the first information is level m, the third CE level is the level m, where m can take the value of 0, 1, or 2. For example, if the CE level associated with the last transmission of the first information is the level 1, then the third CE level is also the level 1.

In some embodiments, in the case of the failure in transmitting the first information, the third CE level is one level higher than the CE level associated with the last transmission of the first information. For example, if the CE level associated with the last transmission of the first information is the level 1, the third CE level is the level 2; alternatively, the third CE level is two levels higher than the CE level associated with the last transmission of the first information, with an upper limit of the level 2. For instance, if the CE level associated with the last transmission of the first information is the level 0, the third CE level is the level 2, or if the CE level associated with the last transmission of the first information is the level 1, the third CE level is the level 2.

When the third CE level is the CE level determined by the terminal device based on the RSRP measurement result and the RSRP threshold configured by the network device, the third CE level is more consistent with the scenario in which the terminal device is located, with higher accuracy; when the third CE level is the CE level associated with the last transmission of the first information, no RSRP measurement is required, making implementation simple; when the third CE level is the CE level acquired by adding the preset level to the CE level associated with the last transmission of the first information, it is more reasonable and can find the appropriate CE level faster.

The failure of transmission using the PUSCH resource may be due to a PUSCH resource configuration error, as dynamic scheduling is not applicable to transmission using the PUSCH resource (such as direct transmission of message 3). After a configuration error, the PUSCH resource cannot be changed. Switching to the transmission using the EDT resource can improve the transmission situation and increase the transmission success rate through dynamic scheduling during the random access process.

In some embodiments, the method for switching transmission schemes of the first and second scenarios can be used in combination. Specifically, in the case where the first event occurs, the transmission scheme of the first information is switched from using the PUR transmission to using the pre-configured PUSCH resource of the first type for transmission. Subsequently, in the case where the number of times the first information is transmitted by the terminal device reaches the first transmission count, the transmission scheme of the first information is switched from using the pre-configured PUSCH resource of the first type for transmission to using the pre-configured PUSCH resource of the second type for transmission.

In some embodiments, the method for switching transmission schemes of the first and third scenarios can be used in combination. That is, in the case where the number of times the terminal device transmits the first information reaches the first transmission count, the transmission scheme of the first information is switched from using the pre-configured PUSCH resource of the first type for transmission to using the pre-configured PUSCH resource of the second type for transmission. In the case where the second event occurs, the transmission scheme of the first information is switched from using the pre-configured PUSCH resource of the second type for transmission to using the EDT resource for transmission.

In some embodiments, the method for switching transmission schemes in the second and third scenarios can be used in combination. Specifically, in the case where the first event occurs, the transmission scheme of the first information is switched from using the PUR transmission to using the pre-configured PUSCH resource for transmission. Subsequently, in the case where the second event occurs, the transmission scheme of the first information is switched from using the pre-configured PUSCH resource for transmission to using the EDT resource for transmission.

The embodiments of the present disclosure do not impose any limitations on the combined use of the aforementioned methods for switching transmission schemes. For specific implementation details, please refer to the aforementioned embodiments, which will not be further elaborated here.

In summary, the method according to these embodiments switches the transmission scheme of the first information from the first uplink transmission scheme to the second uplink transmission scheme in the case where the first condition is met; wherein the first uplink transmission scheme or the second uplink transmission scheme includes: using the pre-configured PUSCH resource for transmission, so that in the case of a transmission failure, different uplink transmission schemes are switched, thereby improving the transmission possibility in the idle state or inactive state, and increasing the success rate of uplink transmission in the idle state or inactive state.

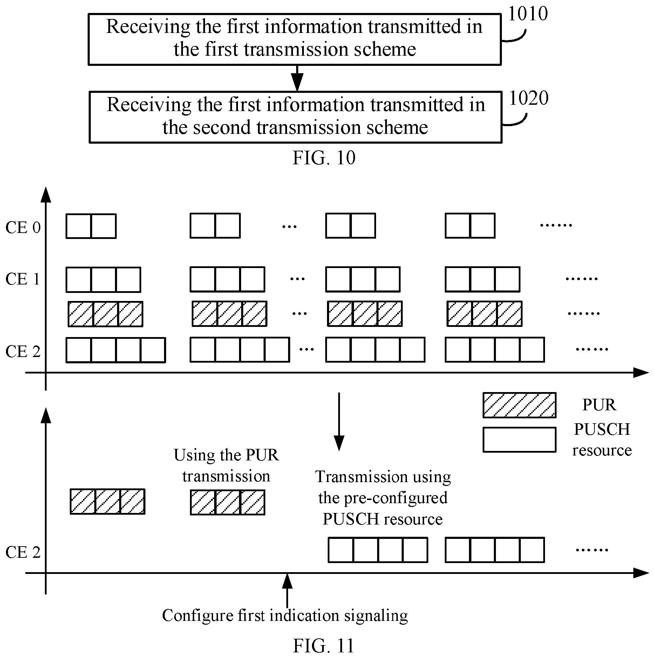

FIG. 10 illustrates a flowchart of a method for receiving information according to some embodiments of the present disclosure. The method is performed by a network device and includes:
**step 1010**: receiving first information transmitted using a first uplink transmission scheme.

In some embodiments, transmission can be understood as at least one of direct transmission, direct transmission of message 3, transmission without scheduling, transmission without message 1, transmission without RAR, transmission without transmitting message 1, transmission without receiving RAR. The message 1 refers to the message 1 in the random access process, and the RAR refers to the message 2 in the random access process.

In some embodiments, the first information includes first signaling; alternatively, the first information includes both first signaling and first data.

In some embodiments, the first signaling includes at least one of: RRC Connection Setup Request (RRCSetupRequest), RRC Connection Resume Request (RRCConnectionResumeRequest), Early Data Request (EarlyDataRequest).

The RRC connection establishment request is used to request the establishment of an RRC connection. The terminal device transmits the RRC connection establishment request to the network device to initiate the connection process; the RRC connection resume request is used to request the resumption of an RRC connection, and when the terminal device is in the non-connected state and needs to resume the connection, the terminal device transmits this request to the network device; the early data request is used to request partial data transmission before the completion of RRC connection establishment, in order to improve connection speed and optimize transmission performance.

**Step 1020**: receiving the first information transmitted using a second uplink transmission scheme.

The second uplink transmission scheme is an uplink transmission scheme determined by a terminal device in an idle state or an inactive state in a case where the first condition is met, and the first uplink transmission scheme or the second uplink transmission scheme includes: transmitting using a pre-configured PUSCH resource.

In some embodiments, the transmission using the pre-configured PUSCH resource can be understood as utilizing at least one of: transmission using a contention-based PUSCH resource, direct transmission using message 3, PUSCH resource transmission without requiring message 1, PUSCH resource transmission without requiring RAR.

In some embodiments, the first condition can be understood as at least one of switching condition, conversion condition, transition condition, fallback condition.

In some embodiments, the reliability of the second uplink transmission scheme is higher than that of the first uplink transmission scheme.

In some embodiments, in the case of the same data volume, the uplink resource used by the second uplink transmission scheme is superior to or more than that used by the first uplink transmission scheme.

In some embodiments, both the first uplink transmission scheme and the second uplink transmission scheme are direct transmission schemes for the terminal device in the idle state or the inactive state, without requiring message 1 and/or RAR.

In some embodiments, the PUSCH resource is the contention-based PUSCH resource. For example, in the contention-based random access mechanism, the PUSCH resource is resource used for transmitting Message 3 (msg3); and in another example, in the direct transmission mechanism for Message 3, the PUSCH resource is the resource used for directly transmitting Message 3.

In some embodiments, the first uplink transmission scheme and the second uplink transmission scheme include at least one of the following three scenarios.

**The first scenario**: The first uplink transmission scheme includes transmitting using the pre-configured PUSCH resource of the first type; and the second uplink transmission scheme includes transmitting using the pre-configured PUSCH resource of the second type.

**The second scenario**: the first uplink transmission scheme includes using the PUR transmission; and the second uplink transmission scheme includes transmitting using the pre-configured PUSCH resource.

**The third scenario**: The first uplink transmission scheme includes transmitting using the pre-configured PUSCH resource; and the second uplink transmission scheme includes transmitting using the EDT resource.

In some embodiments, PUSCH resources (including the PUSCH resource of the first-type and the PUSCH resource of the second-type) are resources configured by the network device.

**For the first scenario: the first uplink transmission scheme includes transmitting using the pre-configured PUSCH resource of the first type; and the second uplink transmission scheme includes transmitting using the pre-configured PUSCH resource of the second type.**

In some embodiments, the first condition includes: the number of times the terminal device transmits the first information reaches the first transmission count, wherein the first transmission count is the maximum transmission attempt count corresponding to the PUSCH resource of the first type.

In the case where the number of times the first information is transmitted by the terminal device reaches the first transmission count, the transmission scheme of the first information is switched from using the pre-configured PUSCH resource of the first type to using the pre-configured PUSCH resource of the second type.

Due to contention in the terminal devices in the transmission mechanism using PUSCH resources (such as the direct transmission mechanism of message 3), allowing a plurality of retransmissions can improve the probability of resolving contention conflicts.

In some embodiments, the maximum transmission attempt count (the maximum retransmission times) includes the initial transmission. For example, if the initial transmission fails and the maximum transmission attempt count is set to 4, then a maximum of 3 more retransmissions can be made. In the embodiments of the present disclosure, the example where the maximum transmission attempt count includes the initial transmission is used for illustration.

In some embodiments, the maximum transmission attempt count does not include the initial transmission. For instance, if the initial transmission fails and the maximum transmission attempt count is set to 4, then a maximum of 4 more retransmissions can be made. At this point, the maximum transmission attempt count can be interpreted as the maximum retransmission attempt count.

In some embodiments, the first repetition count is less than the second repetition count. The first repetition count corresponds to the repetition count of the PUSCH resource of the first type, while the second repetition count corresponds to the repetition count of the PUSCH resource of the second type.

Illustratively, a transmission or retransmission includes a plurality of repetitions of the same information. The repetition count refers to the number of times the same information is repeated in a transmission or retransmission. For example, if the string to be transmitted is 0110 and the repetition count is 3, the transmitted string will be 011001100110.

Due to the potential continuous degradation in channel quality of the terminal device caused by various factors, such as the degradation in channel quality resulting from satellite provision in Non-Terrestrial Network (NTN) scenarios, utilizing the PUSCH resource with correspondingly more repetition times for transmission can enhance the success rate of transmission.

In some embodiments, the method further includes: configuring a first transmission count, wherein the first transmission count is the maximum transmission attempt count corresponding to the PUSCH resource of the first type.

By configuring the first transmission count through the network device, diverse configuration methods can be supported, allowing for configuration based on actual needs.

In some embodiments, the PUSCH resource of the first type is associated with the first CE level, and the PUSCH resource of the second type is associated with the second CE level.

There are three levels of CE: level 0, level 1, and level 2, which correspond to signal attenuation resistance of 144 dB, 154 dB, and 164 dB, respectively. The number of information repetitions between the network device and the terminal device will be selected based on the CE level corresponding to the terminal device.

In some embodiments, the first CE level is the CE level determined by the terminal device based on the RSRP measurement result and the RSRP threshold configured by the network device; alternatively, the first CE level is the CE level specified by the network device during RRC connection release.

In some embodiments, the terminal device acquires the signal quality of the CRS by measuring the CRS, and the measurement result of the CRS is represented by RSRP.

Illustratively, the network device configures three RSRP threshold values, i.e.,RSRP1, RSRP2, and RSRP3, wherein RSRP1 > RSRP2 > RSRP3. When RSRP ≥ RSRP1, the CE level corresponding to the terminal device is the level 0; when RSRP2 ≤ RSRP < RSRP1, the CE level corresponding to the terminal device is the level 1; when RSRP3 ≤ RSRP < RSRP2, the CE level corresponding to the terminal device is the level 2; when RSRP < RSRP3, the reference signal quality is too low, and no corresponding CE level.

When the first CE level is the CE level determined by the terminal device based on the RSRP measurement result and the RSRP threshold configured by the network device, the first CE level is more consistent with the scenario in which the terminal device is located, and the accuracy is higher. When the first CE level is the CE level specified by the network device during RRC connection release, the CE level can be specified based on actual needs without the need for RSRP measurement.

In some embodiments, the second CE level is the CE level acquired by adding a preset level to the first CE level; or the second CE level is the CE level determined by the terminal device based on the RSRP measurement result and the RSRP threshold configured by the network device.

In some embodiments, the second CE level is one level higher than the first CE level, for example, if the first CE level is the level 1, the second CE level is the level 2; or the second CE level is two levels higher than the first CE level, with an upper limit of the level 2, for example, if the first CE level is the level 0, the second CE level is the level 2, or if the first CE level is the level 1, the second CE level is the level 2.

In some embodiments, the second CE level is the CE level determined by the terminal device based on the current RSRP measurement result and the RSRP threshold configured by the network device. The determination method is referred to above and will not be elaborated here.

When the second CE level is the CE level acquired by adding the preset level to the first CE level, RSRP measurement is not required, making implementation simple. When the second CE level is the CE level determined by the terminal device based on the RSRP measurement result and the RSRP threshold configured by the network device, the second CE level is more consistent with the scenario in which the terminal device is located, providing higher accuracy.

In some embodiments, the first timer is a timer initiated by the terminal device when transmitting the first information using the PUSCH resource of the first type, and the first timer is used to limit the time for transmitting the first information.

By using the timer to determine whether the transmission of the first information has failed, the implementation is simple and easy to control.

**For the second scenario: the first uplink transmission scheme includes using the PUR transmission; and the second uplink transmission scheme includes transmitting using the pre-configured PUSCH resource.**

In some embodiments, the first condition includes: occurrence of the first event.

FIG. 7 illustrates a schematic diagram of a method for switching transmission schemes according to some embodiments of the present disclosure. The network device pre-configures a plurality of PUSCH resources and PURs, where white squares indicate PUSCH resources and shaded squares indicate PURs. The periods of PUSCH resources corresponding to different CE levels may be the same or different, and in the embodiments of the present disclosure, the case where the periods are the same is taken as an example for illustration.

Illustratively, taking the example of the PUSCH resource corresponding to CE level 2 (CE 2), the repetition count is 4, meaning that after transmitting the first message, the first message is transmitted three times. In the case where the first event occurs, the transmission scheme of the first information is switched from using the PUR transmission to using the pre-configured PUSCH resource for transmission.

In some embodiments, the first event includes at least one of the following: the second timer expires; the network device indicates the failure of the PUR transmission; the network device indicates the termination of the PUR transmission; wherein the second timer is used to limit the time for the PUR transmission.

In some embodiments, the second timer is a timer initiated by the terminal device when using the PUR transmission, and the second timer is used to limit the time of the PUR transmission. The principle of using the second timer is the same as that of the first timer, and will not be elaborated here.

In some embodiments, the method further includes: configuring first indication signaling, wherein the first indication signaling is used to indicate the failure or termination of the PUR transmission.

In some embodiments, the first indication signaling includes at least one of PDCCH, MAC CE, RRC signaling.

FIG. 11 illustrates a schematic diagram of a method for switching transmission schemes according to some embodiments of the present disclosure. After the terminal device uses the PUR transmission, the network device configures the first indication signaling, wherein the first indication signaling is used to indicate the failure or termination of the PUR transmission.

In some embodiments, the first transmission field in the first indication signaling is used to indicate the failure or termination of the PUR transmission. For example, the value of the first transmission field being 00 indicates the failure of the PUR transmission; the value of the first transmission field being 01 indicates the termination of the PUR transmission.

In some embodiments, the method further includes: configuring a PUR, wherein the PUR is used by the terminal device for the PUR transmission. As illustrated in FIG. 11, the network device configures the PUR, and the terminal device uses the PUR for transmission.

**For the third scenario: the first uplink transmission scheme includes transmitting using the pre-configured PUSCH resource; and the second uplink transmission scheme includes transmitting using the EDT resource.**

In some embodiments, the first condition includes: occurrence of the second event.

FIG. 8 illustrates a schematic diagram of a method for switching transmission schemes according to some embodiments of the present disclosure. The network device pre-configures a plurality of PUSCH resources and EDT resources, where white squares indicate PUSCH resources and squares filled with crosshatching indicate EDT resources. The periods of PUSCH resources corresponding to different CE levels may be the same or different, and in the embodiments of the present disclosure, the case where the periods are the same is taken as an example for illustration.

Illustratively, taking the example of the PUSCH resource corresponding to CE level 1 (CE 1), the repetition count is 3, meaning that the first message is transmitted and then repeated twice. In the case of the second event occurs, the transmission scheme of the first message is switched from using the preconfigured PUSCH resource for transmission to using the EDT resource for transmission .

In some embodiments, the second event includes at least one of the following: the third timer expires; the network device indicates failure in transmitting the first information; the network device indicates termination of transmitting the first information; the number of times the first information is transmitted reaches the second transmission count; wherein the third timer is used to limit the time for transmitting the first information, and the second transmission count is the maximum transmission attempt count corresponding to the PUSCH resource.

In the case where the second event occurs, the transmission scheme is switched. For example, in the case where the second event is that the third timer expires, the implementation is simple and easy to control; in the case where the second event is that the network device indicates the failure or termination in transmitting the first information, the switching is performed based on the indication signaling, which is accurate in operation and does not require the introduction of other mechanisms; in the case where the second event is that the number of times the first information is transmitted reaches the second transmission count, it is easy to monitor, and in the case where the number of times the first information is transmitted has reached the maximum transmission attempt count, the first information is likely to fail to be transmitted, which meets the timing for switching the transmission scheme.

In some embodiments, the third timer is a timer initiated by the terminal device when transmitting the first information using the pre-configured PUSCH resource. The principle of using the third timer is the same as that of the first timer, and will not be further elaborated here.

In some embodiments, the method further includes: configuring second indication signaling, wherein the second indication signaling is used to indicate the failure or termination in transmitting the first information.

In some embodiments, the second transmission field in the second indication signaling is used to indicate the failure or termination in transmitting the first information. For example, the value of the second transmission field being 00 indicates the failure in transmitting the first information; the value of the second transmission field being 01 indicates the termination in transmitting the first information.

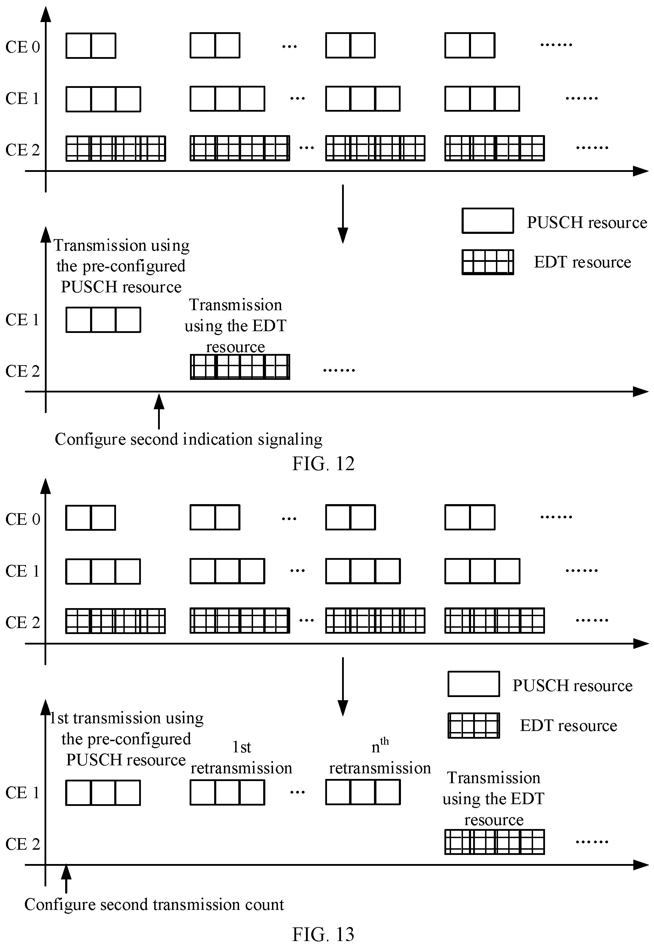

FIG. 12 illustrates a schematic diagram of a method for switching transmission schemes according to some embodiments of the present disclosure. After the terminal device transmits using the pre-configured PUSCH resource, the network device configures second indication signaling. The first indication signaling is used to indicate the failure or termination in transmitting the first information.

In some embodiments, the method further includes: configuring a second transmission count, wherein the second transmission count is the maximum transmission attempt count corresponding to the PUSCH resource.

In some embodiments, the method further includes: configuring the EDT resource, wherein the EDT resource is associated with the third CE level.

FIG. 13 illustrates a schematic diagram of a method for switching transmission schemes according to some embodiments of the present disclosure. Taking the second event as an example, where the number of times the first information is transmitted reaches the second transmission count. The network device configures the second transmission count, wherein the second transmission count includes the initial transmission, that is, the maximum transmission attempt count corresponding to the PUSCH resource is n+1 times, where n is a positive integer.

In the case of a failure in the 1^{st} transmission using the pre-configured PUSCH resource, the terminal device performs the 1^{st} retransmission. After the 1^{st} retransmission fails, the 2^{nd} retransmission is performed until the n^{th} retransmission is performed, then the terminal device switches to using the EDT resource pre-configured by the network device for transmission.

In some embodiments, the third CE level is the CE level determined by the terminal device based on the RSRP measurement result and the RSRP threshold configured by the network device; or the third CE level is the CE level associated with the last transmission of the first information in the case of a failure in transmitting the first information; or the third CE level is the CE level acquired by adding a preset level to the CE level associated with the last transmission of the first information in the case of the failure in transmitting the first information.

In some embodiments, the terminal device acquires the signal quality of the CRS by measuring the CRS, and the measurement result of the CRS is represented by RSRP.

Illustratively, the network device configures three RSRP threshold values, i.e., RSRP1, RSRP2, and RSRP3, wherein RSRP1 > RSRP2 > RSRP3. When RSRP ≥ RSRP1, the CE level corresponding to the terminal device is the level 0; when RSRP2 ≤ RSRP < RSRP1, the CE level corresponding to the terminal device is the level 1; when RSRP3 ≤ RSRP < RSRP2, the CE level corresponding to the terminal device is the level 2; when RSRP < RSRP3, the reference signal quality is too low, and no corresponding CE level.

In some embodiments, in the case of the failure in transmitting the first information, the CE level associated with the last transmission of the first information is level m, and the third CE level is also level m, where m can take the value of 0, 1, or 2. For example, if the CE level associated with the last transmission of the first information is level 1, then the third CE level is also level 1.

In some embodiments, in the case of the failure in transmitting the first information, the third CE level is one level higher than the CE level associated with the last transmission of the first information. For example, if the CE level associated with the last transmission of the first information is the level 1, the third CE level is the level 2; alternatively, the third CE level is two levels higher than the CE level associated with the last transmission of the first information, with an upper limit of the level 2. For instance, if the CE level associated with the last transmission of the first information is the level 0, the third CE level is the level 2; or if the CE level associated with the last transmission of the first information is the level 1, the third CE level is the level 2.

When the third CE level is the CE level determined by the terminal device based on the RSRP measurement result and the RSRP threshold configured by the network device, the third CE level is more consistent with the scenario in which the terminal device is located, with higher accuracy. When the third CE level is the CE level associated with the last transmission of the first information, no RSRP measurement is required, making implementation simple. When the third CE level is the CE level acquired by adding the preset level to the CE level associated with the last transmission of the first information, it is more reasonable and can find the appropriate CE level faster.

In some embodiments, the method for switching transmission schemes of the first and second scenarios can be used in combination. Specifically, in the case where the first event occurs, the transmission scheme of the first information is switched from using the PUR transmission to using the pre-configured PUSCH resource of the first type for transmission. Subsequently, when the number of times the terminal device transmits the first information reaches the first transmission count, the transmission scheme of the first information is switched from using the pre-configured PUSCH resource of the first type for transmission to using the pre-configured PUSCH resource of the second type for transmission.

In some embodiments, the method for switching transmission schemes of the first and third scenarios can be used in combination. That is, when the number of times the terminal device transmits the first information reaches the first transmission count, the transmission scheme of the first information is switched from using the pre-configured PUSCH resource of the first type for transmission to using the pre-configured PUSCH resource of the second type for transmission. In the case where the second event occurs, the transmission scheme of the first information is switched from using the pre-configured PUSCH resource of the second type for transmission to using the EDT resource for transmission.

In some embodiments, the method for switching transmission schemes of the second and third scenarios can be used in combination. That is, in the case where the first event occurs, the transmission scheme of the first information is switched from using the PUR transmission to using the pre-configured PUSCH resource for transmission. Subsequently, in the case where the second event occurs, the transmission scheme of the first information is switched from using the pre-configured PUSCH resource for transmission to using the EDT resource for transmission.

The embodiments of the present disclosure do not limit the combination of the above-mentioned methods for switching transmission schemes. For specific implementation details, please refer to the aforementioned embodiments, which will not be further elaborated here.

In summary, the method according to in these embodiments involves receiving the first information transmitted using the first uplink transmission scheme; receiving the first information transmitted using the second uplink transmission scheme; wherein the second uplink transmission scheme is determined by the terminal device in the idle state or the inactive state in the case where the first condition is met. The first uplink transmission scheme or the second uplink transmission scheme includes: transmitting using the pre-configured PUSCH resource, such that in the case of transmission failure, a different uplink transmission scheme is switched to enable the network device to receive the first information, thereby improving the transmission possibility of the terminal device in the idle state or the inactive state and increasing the success rate of uplink transmission in the idle state or the inactive state.

In the above embodiments, the embodiments corresponding to FIG. 5 and the embodiments corresponding to FIG. 10 may be implemented independently or in combination, and the present disclosure does not limit this.

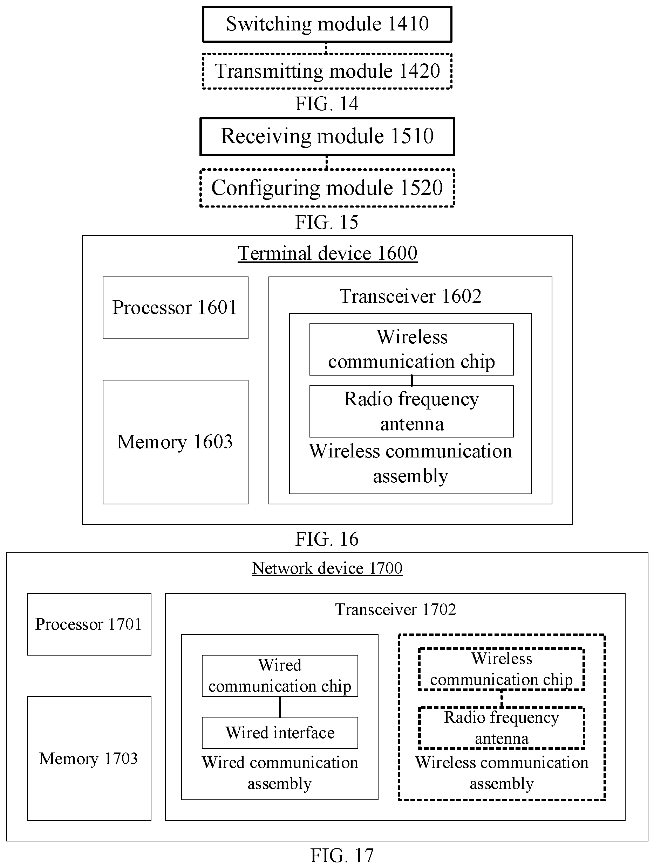

FIG. 14 illustrates a block diagram of an apparatus for switching transmission schemes according to some embodiments of the present disclosure. The apparatus can be implemented as a terminal device or as a part of a terminal device through software, hardware, or a combination of both. The apparatus includes: a switching module 1410, configured to switch a transmission scheme of first information from a first uplink transmission scheme to a second uplink transmission scheme in a case where a first condition is met; wherein the first uplink transmission scheme or the second uplink transmission scheme includes transmitting using a pre-configured PUSCH resource.

In one possible design of this embodiment, transmission can be understood as at least one of direct transmission, direct transmission of message 3, transmission without scheduling, transmission without message 1, transmission without RAR, transmission without transmitting message 1, transmission without receiving RAR. The message 1 refers to the message 1 in the random access process, and the RAR refers to the message 2 in the random access process.

In one possible design of this embodiment, transmission using the pre-configured PUSCH resource can be understood as at least one of: contention-based PUSCH resource transmission, direct resource transmission using message 3, PUSCH resource transmission without message 1, PUSCH resource transmission without RAR.

In one possible design of this embodiment, the first condition can be understood as at least one of switching condition, conversion condition, transition condition, fallback condition.

In one possible design of this embodiment, the reliability of the second uplink transmission scheme is higher than that of the first uplink transmission scheme.

In one possible design of this embodiment, in the case of equal data volume, the uplink resource used by the second uplink transmission scheme is superior to or more than that used by the first uplink transmission scheme.

In one possible design of this embodiment, both the first uplink transmission scheme and the second uplink transmission scheme are direct transmission schemes where the apparatus for switching transmission schemes is in an idle state or an inactive state, without the need for message 1 and/or RAR.

In one possible design of this embodiment, the PUSCH resource is the contention-based PUSCH resource. For example, in a contention-based random access mechanism, the PUSCH resource is the resource used for transmitting Message 3 (msg3); and in another example, in a direct transmission mechanism for Message 3, the PUSCH resource is the resource used for directly transmitting Message 3.

In one possible design of this embodiment, the first information includes first signaling; or the first information includes both first signaling and first data.

In one possible design of this embodiment, the first signaling includes at least one of: RRC Connection Setup Request (RRCSetupRequest), RRC Connection Resume Request (RRCConnectionResumeRequest), Early Data Request (EarlyDataRequest).

The RRC connection establishment request is used to request the establishment of an RRC connection. The apparatus for switching transmission schemes transmits the RRC connection establishment request to the network device to initiate the connection process. The RRC connection resume request is used to request the resumption of an RRC connection. When the apparatus for switching transmission schemes is in a non-connected state and needs to resume the connection, the apparatus transmits this request to the network device. The early data request is used to request partial data transmission before the completion of RRC connection establishment, in order to improve connection speed and optimize transmission performance.

In one possible design of this embodiment, the first uplink transmission scheme and the second uplink transmission scheme include at least one of the following three scenarios.

**The first scenario**: The first uplink transmission scheme includes transmitting using the pre-configured PUSCH resource of the first type; and the second uplink transmission scheme includes transmitting using the pre-configured PUSCH resource of the second type.

**The second scenario**: The first uplink transmission scheme includes using the PUR transmission; and the second uplink transmission scheme includes transmitting using the pre-configured PUSCH resource.

**The third scenario**: The first uplink transmission scheme includes transmitting using the pre-configured PUSCH resource; and the second uplink transmission scheme includes transmitting using the EDT resource.

In one possible design of this embodiment, the PUSCH resources (including the PUSCH resource of the first type of and the PUSCH resource of the second type) are resources configured by the network device.

**For the first scenario: the first uplink transmission scheme includes transmitting using the pre-configured PUSCH resource of the first type; and the second uplink transmission scheme includes transmitting using the pre-configured PUSCH resource of the second type.**

In one possible design of this embodiment, the first condition includes: the number of times the apparatus for switching transmission schemes transmits the first information reaches the first transmission count, wherein the first transmission count is the maximum transmission attempt count corresponding to the PUSCH resource of the first type.

In the case where the number of times the apparatus for switching transmission schemes transmits the first information reaches the first transmission count, the transmission scheme of the first information is switched from using the pre-configured PUSCH resource of the first type to using the pre-configured PUSCH resource of the second type.

Due to contention in apparatuses for switching transmission schemes in the PUSCH resource transmission mechanism (such as the direct transmission mechanism of message 3), allowing a plurality of retransmissions can improve the probability of resolving contention conflicts.

In one possible design of this embodiment, the first transmission count is configured by the network device.

Configuring the first transmission count through the network device allows for a variety of configuration methods, enabling configuration based on actual needs.

In one possible design of this embodiment, the maximum transmission attempt count (the maximum retransmission times) include the initial transmission. For example, if the maximum retransmission transmission attempt count is 4, after the initial transmission fails, then a maximum of 3 more retransmissions can be performed. In the embodiments of the present disclosure, the example where the maximum transmission attempt count includes the initial transmission is used for illustration.

In one possible design of this embodiment, the maximum transmission attempt count does not include the initial transmission. For example, if the initial transmission fails and the maximum transmission attempt count is set to 4, then a maximum of 4 more retransmissions can be performed. At this point, the maximum transmission attempt count can be understood as the maximum retransmission attempt count.

In one possible design of this embodiment, the first repetition count is less than the second repetition count. The first repetition count corresponds to the repetition count for the PUSCH resource of the first type, while the second repetition count corresponds to the repetition count for the PUSCH resource of the second type.

Illustratively, a transmission or a retransmission includes a plurality of repetitions of the same information. The repetition count refers to the number of times the same information is repeated in a transmission or retransmission. For example, if the string to be transmitted is 0110 and the repetition count is 3, then the transmitted string will be 011001100110.

Due to the potential continuous degradation in channel quality in the apparatus for switching transmission schemes caused by various factors, such as the degradation in channel quality resulting from satellite provision in Non-Terrestrial Network (NTN) scenarios, utilizing the PUSCH resource with correspondingly more repetition times for transmission can enhance the success rate of transmission.

In one possible design of this embodiment, the transmission module 1420 is configured to retransmit the first information in the case of a failure in transmitting the first information using the preconfigured PUSCH resource of the first type.

Possible scenarios for the failure in transmitting the first information include at least one of the following: the first timer expires; the network device indicates that the transmission of the first information fails or terminates; the transmission of the first information is interfered with by other devices; a plurality of devices attempt to transmit the first information simultaneously.

In one possible design of this embodiment, the first timer is a timer initiated by the apparatus for switching transmission schemes when transmitting the first information using the PUSCH resource of the first type, and the first timer is used to limit the time for transmitting the first information.

In one possible design of this embodiment, the transmission module 1420 is configured to retransmit the first information in the case where the first timer expires.

Illustratively, the first timer limits the time for transmitting the first information to 100 milliseconds. The starting time is determined as the moment when the apparatus for switching transmission schemes starts transmitting the first information using the PUSCH resource the first type. In the case where the first timer exceeds 100 milliseconds, the first information is retransmitted.

By using a timer to determine whether the transmission of the first information has failed, the implementation is simple and easy to control.

In one possible design of this embodiment, the transmission module 1420 is further configured to perform the (i+1)^{th} retransmission in the case of a failure in the i^{th} retransmission, until the number of transmissions of the first information reaches the first transmission count; wherein the first transmission count is the maximum transmission attempt count corresponding to the PUSCH resource of the first type, and i is a positive integer.

By retransmitting the first information in the case of the failure in the initial transmission of the first information, and continuing to retransmit the first information in case of the failure in the retransmission, until the number of times the first information is transmitted reaches the first transmission count, the transmission success rate of the first information is improved.

In one possible design of this embodiment, the PUSCH resource of the first type is associated with the first CE level, and the PUSCH resource of the second type is associated with the second CE level.

There are three levels of CE: level 0, level 1, and level 2, which correspond to signal attenuation resistance of 144 dB, 154 dB, and 164 dB, respectively. The number of information repetitions between the network device and the apparatus for switching transmission schemes will be determined based on the CE level corresponding to the apparatus for switching transmission schemes.

In one possible design of this embodiment, the first CE level is the CE level determined by the apparatus for switching transmission schemes based on the measurement result of reference signal received power (RSRP) and the RSRP threshold configured by the network device; or the first CE level is the CE level specified by the network device during RRC connection release.

In one possible design of this embodiment, the apparatus for switching transmission schemes acquires the signal quality of the Cell-specific Reference Signal (CRS) by measuring the CRS, and the measurement result of the CRS is represented by RSRP.

Illustratively, the network device configures three RSRP threshold values, i.e., RSRP1, RSRP2, and RSRP3, wherein RSRP1 > RSRP2 > RSRP3. When RSRP ≥ RSRP1, the CE level corresponding to the apparatus for switching transmission schemes is the level 0; when RSRP2 ≤ RSRP < RSRP1, the CE level corresponding to the apparatus for switching transmission schemes is the level 1; when RSRP3 ≤ RSRP < RSRP2, the CE level corresponding to the apparatus for switching transmission schemes is the level 2; when RSRP < RSRP3, the reference signal quality is too low, and no corresponding CE level.

When the first CE level is the CE level determined by the apparatus for switching transmission schemes based on the RSRP measurement result and the RSRP threshold configured by the network device, the first CE level is more consistent with the scenario in which the apparatus for switching transmission schemes is located, and the accuracy is higher. When the first CE level is the CE level specified by the network device during RRC connection release, the CE level can be specified based on actual needs, without the need for RSRP measurement.

In one possible design of this embodiment, the second CE level is the CE level acquired by adding a preset level to the first CE level; or the second CE level is the CE level determined by the apparatus for switching transmission schemes based on the RSRP measurement result and the RSRP threshold configured by the network device.

In one possible design of this embodiment, the second CE level is one level higher than the first CE level, for example, if the first CE level is the level 1, the second CE level is the level 2; or the second CE level is two levels higher than the first CE level, with an upper limit of the level 2, for example, if the first CE level is the level 0, the second CE level is the level 2, or if the first CE level is the level 1, the second CE level is the level 2.

In one possible design of this embodiment, the second CE level is determined by the apparatus for switching transmission schemes based on the current RSRP measurement result and the RSRP threshold configured by the network device. The determination method is referred to above and will not be elaborated here.

When the second CE level is the CE level acquired by adding the preset level to the first CE level, RSRP measurement is not required, making implementation simple; when the second CE level is the CE level determined by the apparatus for switching transmission schemes based on the RSRP measurement result and the RSRP threshold configured by the network device, the second CE level is more consistent with the scenario in which the apparatus for switching transmission schemes is located, resulting in higher accuracy.

**For the second scenario: the first uplink transmission scheme includes using the PUR transmission; and the second uplink transmission scheme includes transmitting using the pre-configured PUSCH resource.**

In one possible design of this embodiment, the first condition includes: occurrence of the first event.

In one possible design of this embodiment, the first event includes at least one of the following: the second timer expires; the network device indicates the failure of PUR transmission; the network device indicates the termination of the PUR transmission; wherein the second timer is used to limit the time for the PUR transmission.

In one possible design of this embodiment, the network device indicates the failure or termination of the PUR transmission through configuration indication signaling, wherein the indication signaling includes at least one of: Physical Downlink Control Channel (PDCCH), Medium Access Control Control Element (MAC CE), RRC signaling.

In the case where the first event occurs, the transmission scheme is switched. For example, in the case where the first event is that the second timer expires, the implementation is simple and easy to control. In the case where the first event is that the network device indicates the failure or termination of the PUR transmission, the switching is performed based on the indication signaling, ensuring accurate operation without the need to introduce other mechanisms.

In one possible design of this embodiment, the pre-configured PUSCH resource is associated with the fourth CE level.

In one possible design of this embodiment, the fourth CE level is the CE level determined by the apparatus for switching transmission schemes based on the RSRP measurement result and the RSRP threshold configured by the network device. For specific implementation details, refer to the embodiment of the first scenario, which will not be elaborated here.

In one possible design of this embodiment, the second timer is a timer initiated by the apparatus for switching transmission schemes when using PUR transmission, and the second timer is used to limit the time of the PUR transmission. The principle of using the second timer is the same as that of the first timer, and will not be elaborated here.

The failure of the PUR transmission may be due to degradation in channel quality, where the PUR configured by the network device cannot adapt to the degraded channel quality. In this case, fallback to PUSCH resource transmission (such as direct transmission of message 3) is employed. The PUSCH resource transmission mechanism can select the PUSCH resource that is suitable for the channel quality, thereby improving the transmission success rate.

**For the third scenario: the first uplink transmission scheme includes transmitting using the pre-configured PUSCH resource; and the second uplink transmission scheme includes transmitting using the EDT resource.**

In one possible design of this embodiment, the first condition includes: occurrence of the second event.

In one possible design of this embodiment, the second event includes at least one of the following: the third timer expires; the network device indicates that the transmission of the first information fails; the network device indicates that the transmission of the first information is terminated; the number of times the first information is transmitted reaches the second transmission count; wherein the third timer is used to limit the time for transmitting the first information, and the second transmission count is the maximum transmission attempt count corresponding to the PUSCH resource.

In the case where the second event occurs, the transmission scheme is switched. For instance, in the case where the second event is that the third timer expires, the implementation is simple and easy to control; in the case where the second event is that the network device indicates the failure or termination in transmitting the first information, the switching is performed based on the indication signaling, ensuring accurate operation without the need to introduce other mechanisms; in the case where the second event is that the number of times the first information is transmitted reaches the second transmission limit, it is easy to monitor, and in the case where the number of times the first information is transmitted reaches the maximum transmission attempt count, there is a high probability that the transmission of the first information has failed, which meets the timing for switching the transmission scheme.

In one possible design of this embodiment, the second transmission count is configured by the network device.

Configuring the second transmission count through the network device can support a variety of configuration methods, allowing for configurations based on actual needs.

In one possible design of this embodiment, the third timer is a timer initiated by the apparatus for switching transmission schemes when transmitting the first information using the pre-configured PUSCH resource. The third timer is used to limit the time for transmitting the first information. The principle of using the third timer is the same as that of the first timer, and will not be further elaborated here.

In one possible design of this embodiment, the EDT resource is associated with the third CE level.

In one possible design of this embodiment, the third CE level is the CE level determined by the apparatus for switching transmission schemes based on the RSRP measurement result and the RSRP threshold configured by the network device; or the third CE level is the CE level associated with the last transmission of the first information in the case of failure in transmitting the first information; or the third CE level is the CE level acquired by adding the preset level to the CE level associated with the last transmission of the first information in the case of failure in transmitting the first information.

In one possible design of this embodiment, the apparatus for switching transmission schemes acquires the signal quality of CRS by measuring the CRS, and the measurement result of CRS is represented by RSRP.

Illustratively, the network device configures three RSRP threshold values, i.e., RSRP1, RSRP2, and RSRP3, wherein RSRP1 > RSRP2 > RSRP3. When RSRP ≥ RSRP1, the CE level corresponding to the apparatus for switching transmission schemes is the level 0; when RSRP2 ≤ RSRP < RSRP1, the CE level corresponding to the apparatus for switching transmission schemes is the level 1; when RSRP3 ≤ RSRP < RSRP2, the CE level corresponding to the apparatus for switching transmission schemes is the level 2; when RSRP < RSRP3, the reference signal quality is too low, and no corresponding CE level.

In one possible design of this embodiment, in the case of a failure in transmitting the first information, the CE level associated with the last transmission of the first information is the level m, and the third CE level is also the level m, where m can take the value of 0, 1, or 2. For example, if the CE level associated with the last transmission of the first information is the level 1, then the third CE level is also the level 1.

In one possible design of this embodiment, in the case of a failure in transmitting the first information, the third CE level is acquired by adding one level to the CE level associated with the last transmission of the first information. For example, if the CE level associated with the last transmission of the first information is the level 1, the third CE level is the level 2; alternatively, the third CE level is acquired by adding two levels to the CE level associated with the last transmission of the first information, with an upper limit of the level 2. For instance, if the CE level associated with the last transmission of the first information is the level 0, the third CE level is the level 2; or if the CE level associated with the last transmission of the first information is the level 1, the third CE level is the level 2.

When the third CE level is the CE level determined by the apparatus for switching transmission schemes based on the RSRP measurement result and the RSRP threshold configured by the network device, the third CE level is more consistent with the scenario in which the apparatus for switching transmission schemes is located, resulting in higher accuracy. When the third CE level is the CE level associated with the last transmission of the first information, no RSRP measurement is required, making implementation simple. When the third CE level is the CE level acquired by adding the preset level to the CE level associated with the last transmission of the first information, it is more reasonable and can find a suitable CE level more quickly.

The failure of transmission using the PUSCH resource may be due to incorrect PUSCH resource configuration, as dynamic scheduling is not applicable to transmission using the PUSCH resource (such as direct transmission of message 3). After a configuration error, it is not possible to change the PUSCH resources. Switching to the EDT resource transmission can improve the transmission situation and increase the transmission success rate through dynamic scheduling during the random access process.

In one possible design of this embodiment, the first scenario and the second scenario can be used in combination. That is, in the case where the first event occurs, the transmission scheme of the first information is switched from using the PUR transmission to transmitting using the pre-configured PUSCH resource of the first type. Subsequently, when the number of times the first information is transmitted by the apparatus for switching transmission schemes reaches the first transmission count, the transmission scheme of the first information is switched from transmitting using the pre-configured PUSCH resource of the first type to transmitting using the pre-configured PUSCH resource of the second type.

In one possible design of this embodiment, the first scenario and the third scenario can be combined. Specifically, when the number of times the apparatus for switching transmission schemes transmits the first information reaches the first transmission count, the transmission scheme of the first information is switched from transmitting using the pre-configured PUSCH resource of the first type to transmitting using the pre-configured PUSCH resource of the second type. In the case where the second event occurs, the transmission scheme of the first information is switched from transmitting using the pre-configured PUSCH resource of the second type to transmitting using the EDT resource.

In one possible design of this embodiment, the second and third scenarios can be combined. Specifically, in the case where the first event occurs, the transmission scheme of the first information is switched from using the PUR transmission to using the pre-configured PUSCH resource for transmission. Subsequently, in the case where the second event occurs, the transmission scheme of the first information is switched from using the pre-configured PUSCH resource for transmission to using the EDT resource for transmission.

The embodiments of the present disclosure do not limit the combination of the above situations, and the specific implementation details refer to the above embodiments, which will not be repeated here.

In this embodiment, the transmission module 1420 can be split into a plurality of transmission modules, such as a first transmission module and a second transmission module. The first transmission module is used to retransmit the first information in the case of failure in transmitting the first information using the preconfigured PUSCH resource of the first type. The second transmission module is used to perform the (i+1)^{th} retransmission in the case of failure in the i^{th} retransmission, until the transmission times of the first information reach the first transmission count. Alternatively, the first transmission module is used to perform the (i+1)^{th} retransmission in the case of failure in the i^{th} retransmission, until the transmission times of the first information reach the first transmission count, and the second transmission module is used to retransmit the first information in the case of failure in transmitting the first information using the preconfigured PUSCH resource of the first type. This embodiment does not limit the functions of different transmission modules.

This embodiment is exemplified by one switching module 1410 and one transmitting module 1420, but the number of switching modules 1410 and transmitting modules 1420 is not limited.

For the introduction of the function of the switching module 1410, please refer to the content of step 510 in the embodiment illustrated in FIG. 5.

For the introduction of the function of the transmitting module 1420, please refer to the content of step 510 in the embodiment illustrated in FIG. 5.

FIG. 15 illustrates a block diagram of an apparatus for receiving information according to some embodiments of the present disclosure. The apparatus can be implemented as a network device or as a part of a network device through software, hardware, or a combination of both. The apparatus includes: a receiving module 1510, configured to receive first information transmitted using a first uplink transmission scheme, and receive the first information transmitted using a second uplink transmission scheme; wherein the second uplink transmission scheme is an uplink transmission scheme determined by a terminal device in an idle state or an inactive state in a case where a first condition is met, and the first uplink transmission scheme or the second uplink transmission scheme includes: transmission using a pre-configured PUSCH resource.

In one possible design of this embodiment, transmission can be understood as at least one of direct transmission, direct transmission of message 3, transmission without scheduling, transmission without message 1, transmission without RAR, transmission without transmitting message 1, transmission without receiving RAR. The message 1 refers to the message 1 in the random access process, and the RAR refers to the message 2 in the random access process.

In one possible design of this embodiment, the first information includes the first signaling; or the first information includes both the first signaling and the first data.

In one possible design of this embodiment, the first signaling includes at least one of: RRC Connection Setup Request (RRCSetupRequest), RRC Connection Resume Request (RRCConnectionResumeRequest), Early Data Request (EarlyDataRequest).

The RRC connection establishment request is used to request the establishment of an RRC connection. The terminal device transmits the RRC connection establishment request to the apparatus for receiving information, initiating the connection process. The RRC connection resume request is used to request the resumption of an RRC connection. When the terminal device is in a non-connected state and needs to resume the connection, the terminal device transmits this request to the apparatus for receiving information. The early data request is used to request partial data transmission before the completion of RRC connection establishment, in order to improve connection speed and optimize transmission performance.

In one possible design of this embodiment, transmitting using the pre-configured PUSCH resource can be understood as least one of: contention-based PUSCH resource transmission, direct resource transmission using message 3, PUSCH resource transmission without requiring message 1, PUSCH resource transmission without requiring RAR.

In one possible design of this embodiment, the first condition can be understood as at least one of switching condition, conversion condition, transition condition, fallback condition.

In one possible design of this embodiment, the reliability of the second uplink transmission scheme is higher than that of the first uplink transmission scheme.

In one possible design of this embodiment, in the case of the same data volume, the uplink resource used by the second uplink transmission scheme is superior to or more than that used by the first uplink transmission scheme.

In one possible design of this embodiment, both the first uplink transmission scheme and the second uplink transmission scheme are direct transmission schemes for the terminal device in the idle state or the inactive state, without requiring message 1 and/or RAR.

In one possible design of this embodiment, the PUSCH resource is the contention-based PUSCH resource. For example, in a contention-based random access mechanism, the PUSCH resource is the resource used for transmitting Message 3 (msg3); for another example, in a direct transmission mechanism for Message 3, the PUSCH resource is the resource used for directly transmitting Message 3.

In one possible design of this embodiment, the first uplink transmission scheme and the second uplink transmission scheme include at least one of the following three scenarios.

**The first scenario**: The first uplink transmission scheme includes transmitting using the pre-configured PUSCH resource of the first type; and the second uplink transmission scheme includes transmitting using the pre-configured PUSCH resource of the second type.

**The second scenario**: the first uplink transmission scheme includes using the PUR transmission; and the second uplink transmission scheme includes transmitting using the pre-configured PUSCH resource.

**The third scenario**: The first uplink transmission scheme includes transmitting using the pre-configured PUSCH resource; and the second uplink transmission scheme includes transmitting using the EDT resource.

In one possible design of this embodiment, the PUSCH resources (including the PUSCH resource of the first type and the PUSCH resource of the second type) are resources configured by the apparatus for receiving information.

**For the first scenario: the first uplink transmission scheme includes transmitting using the pre-configured PUSCH resource of the first type; and the second uplink transmission scheme includes transmitting using the pre-configured PUSCH resource of the second type.**

In one possible design of this embodiment, the first condition includes: the number of times the terminal device transmits the first information reaches the first transmission count, wherein the first transmission count is the maximum transmission attempt count corresponding to the PUSCH resource of the first type.

In the case where the number of times the first information is transmitted by the terminal device reaches the first transmission count, the transmission scheme of the first information is switched from transmitting using the pre-configured PUSCH resource of the first type to transmitting using the pre-configured PUSCH resource of the second type.

Due to contention in terminal devices in the transmission mechanism using PUSCH resources (such as the direct transmission mechanism of message 3), allowing a plurality of retransmissions can improve the probability of resolving contention conflicts.

In one possible design of this embodiment, the maximum transmission attempt count (the maximum retransmission times) include the initial transmission. For example, if the initial transmission fails and the maximum transmission attempt count is set to 4, then a maximum of 3 more retransmissions can be performed. In the embodiments of the present disclosure, the example where the maximum transmission attempt count include the initial transmission is used for illustration.

In one possible design of this embodiment, the maximum transmission attempt count does not include the initial transmission. For example, if the initial transmission fails and the maximum transmission attempt count is set to 4, then a maximum of 4 more retransmissions can be performed. At this point, the maximum transmission attempt count can be understood as the maximum retransmission attempt count.

In one possible design of this embodiment, the first repetition count is less than the second repetition count. The first repetition count corresponds to the repetition count for the PUSCH resource of the first type, while the second repetition count corresponds to the repetition count for the PUSCH resource of the second type.

Illustratively, a transmission or a retransmission includes a plurality of repetitions of the same information. The repetition count refers to the number of times the same information is repeated in a transmission or retransmission. For example, if the string to be transmitted is 0110 and the repetition count is 3, the transmitted string will be 011001100110.

Due to the potential continuous degradation in channel quality in terminal devices caused by various factors, such as the degradation in channel quality resulting from satellite provision in Non-Terrestrial Network (NTN) scenarios, utilizing the PUSCH resource with correspondingly more repetition times for transmission can enhance the success rate of transmission.

In one possible design of this embodiment, a configuration module 1520 is configured to configure a first transmission count, wherein the first transmission count is the maximum transmission attempt count corresponding to the PUSCH resource of the first type.

By configuring the first transmission count through the apparatus for receiving information, a variety of configuration methods can be supported, allowing for configuration based on actual needs.

In one possible design of this embodiment, the PUSCH resource of the first type is associated with the first CE level, and the PUSCH resource of the second type is associated with the second CE level.

There are three CE levels: level 0, level 1, and level 2, which correspond to signal attenuation resistance of 144 dB, 154 dB, and 164 dB, respectively. The apparatus for receiving information and the terminal device will select the corresponding information repetition times based on the CE level corresponding to the terminal device.

In one possible design of this embodiment, the first CE level is the CE level determined by the terminal device based on the RSRP measurement result and the RSRP threshold configured by the apparatus for receiving information; alternatively, the first CE level is the CE level specified by the apparatus for receiving information during RRC connection release.

In one possible design of this embodiment, the terminal device acquires the signal quality of the CSR by measuring the CRS, wherein the measurement result of the CRS is represented by RSRP.

Illustratively, the apparatus for receiving information configures three RSRP threshold values, i.e., RSRP1, RSRP2, and RSRP3, wherein RSRP1 > RSRP2 > RSRP3. When RSRP ≥ RSRP1, the CE level corresponding to the terminal device is the level 0; when RSRP2 ≤ RSRP < RSRP1, the CE level corresponding to the terminal device is the level 1; when RSRP3 ≤ RSRP < RSRP2, the CE level corresponding to the terminal device is the level 2; when RSRP < RSRP3, the reference signal quality is too low, and no corresponding CE level.

When the first CE level is the CE level determined by the terminal device based on the RSRP measurement result and the RSRP threshold configured by the apparatus for receiving information, the first CE level is more consistent with the scenario in which the terminal device is located, with higher accuracy. When the first CE level is the CE level specified by the apparatus for receiving information during RRC connection release, the CE level can be specified based on actual needs without the need for RSRP measurement.

In one possible design of this embodiment, the second CE level is the CE level acquired by adding a preset level to the first CE level; or the second CE level is the CE level determined by the terminal device based on the RSRP measurement result and the RSRP threshold configured by the apparatus for receiving information.

In one possible design of this embodiment, the second CE level is one level higher than the first CE level, for example, if the first CE level is the level 1, the second CE level is the level 2; or the second CE level is two levels higher than the first CE level, with an upper limit of the level 2, for example, if the first CE level is the level 0, the second CE level is the level 2, or if the first CE level is the level 1, the second CE level is the level 2.

In one possible design of this embodiment, the second CE level is the CE level determined by the terminal device based on the current RSRP measurement result and the RSRP threshold configured by the apparatus for receiving information. The determination method is referred to above and will not be elaborated here.

When the second CE level is the CE level acquired by adding the preset level to the first CE level, RSRP measurement is not required, making implementation simple; when the second CE level is the CE level determined by the terminal device based on the RSRP measurement result and the RSRP threshold configured by the apparatus for receiving information, the second CE level is more consistent with the scenario in which the terminal device is located, resulting in higher accuracy.

In one possible design of this embodiment, the first timer is a timer initiated by the terminal device when transmitting the first information using the PUSCH resource of the first type, and the first timer is used to limit the time for transmitting the first information.

By using the timer to determine whether the transmission of the first information has failed, the implementation is simple and easy to control.

**For the second scenario: the first uplink transmission scheme includes using the PUR transmission; and the second uplink transmission scheme includes transmitting using the pre-configured PUSCH resource.**

In one possible design of this embodiment, the first condition includes: occurrence of the first event.

In one possible design of this embodiment, the first event includes at least one of the following: the second timer expires; the apparatus for receiving information indicates a failure of the PUR transmission; the apparatus for receiving information indicates a termination of the PUR transmission; wherein the second timer is used to limit the time for the PUR transmission.

In one possible design of this embodiment, the second timer is a timer initiated by the terminal device when using the PUR transmission, and the second timer is used to limit the time for the PUR transmission. The principle of using the second timer is the same as that of the first timer, and will not be elaborated here.

In one possible design of this embodiment, the configuration module 1520 is also configured to configure first indication signaling, wherein the first indication signaling is used to indicate the failure or termination of the PUR transmission.

In one possible design of this embodiment, the first indication signaling includes at least one of PDCCH, MAC CE, RRC signaling.

FIG. 11 illustrates a schematic diagram of a method for switching transmission schemes according to some embodiments of the present disclosure. After the terminal device uses the PUR transmission, the apparatus for receiving information configures the first indication signaling, wherein the first indication signaling is used to indicate the failure or termination of the PUR transmission.

In one possible design of this embodiment, the first transmission field in the first indication signaling is used to indicate the failure or termination of the PUR transmission. For example, the value of the first transmission field being 00 indicates the failure of the PUR transmission; the value of the first transmission field being 01 indicates the termination of the PUR transmission.

In one possible design of this embodiment, the configuration module 1520 is also configured to configure the PUR, wherein the PUR is used by the terminal device for the PUR transmission. As illustrated in FIG. 11, the apparatus for receiving information configures the PUR, and the terminal device uses the PUR for transmission.

**For the third scenario: the first uplink transmission scheme includes transmitting using the pre-configured PUSCH resource; and the second uplink transmission scheme includes transmitting using the EDT resource.**

In one possible design of this embodiment, the first condition includes: occurrence of the second event.

In one possible design of this embodiment, the second event includes at least one of the following: the third timer expires; the apparatus for receiving information indicates that the transmission of the first information fails; the apparatus for receiving information indicates that the transmission of the first information terminates; the number of times the first information is transmitted reaches the second transmission count; wherein the third timer is used to limit the time for transmitting the first information, and the second transmission count is the maximum transmission attempt count corresponding to the PUSCH resource.

In the case where the second event occurs, the transmission scheme is switched. For example, in the case where the second event is the third timer expires, the implementation is simple and easy to control; in the case where the second event is that the apparatus for receiving information indicates that the transmission of the first information fails or terminates, the switching is performed based on the indication signaling, with accurate operation and no need to introduce other mechanisms; in the case where the second event is that the number of times the first information is transmitted reaches the second transmission count, it is easy to monitor, and in the case where the number of times the first information is transmitted has reached the maximum transmission attempt count, there is a high probability that the transmission of the first information has failed, which meets the timing for switching the transmission scheme.

In one possible design of this embodiment, the third timer is a timer initiated by the terminal device when transmitting the first information transmitting using the pre-configured PUSCH resource. The principle of using the third timer is the same as that of the first timer, and will not be elaborated here.

In one possible design of this embodiment, the configuration module 1520 is also configured to configure second indication signaling, wherein the second indication signaling is used to indicate the failure or termination in transmitting the first information.

In one possible design of this embodiment, the second transmission field in the second indication signaling is used to indicate the failure or termination in transmitting the first information. For example, the value of the second transmission field being 00 indicates that the transmission of the first information fails; the value of the second transmission field being 01 indicates that the transmission of the first information terminates.

FIG. 12 illustrates a schematic diagram of a method for switching transmission schemes according to some embodiments of the present disclosure. After the terminal device transmits using pre-configured PUSCH resource, the apparatus for receiving information configures the second indication signaling. The first indication signaling is used to indicate the failure or termination in transmitting the first information.

In one possible design of this embodiment, the configuration module 1520 is further configured to configure a second transmission count, wherein the second transmission count is the maximum transmission attempt count corresponding to the PUSCH resource.

In one possible design of this embodiment, the configuration module 1520 is also configured to configure the EDT resource, wherein the EDT resource is associated with the third CE level.

In one possible design of this embodiment, the third CE level is the CE level determined by the terminal device based on the RSRP measurement result and the RSRP threshold configured by the apparatus for receiving information; or the third CE level is the CE level associated with the last transmission of the first information in the case of failure in transmitting the first information; or the third CE level is the CE level acquired by adding the preset level to the CE level associated with the last transmission of the first information in the case of failure in transmitting the first information.

In one possible design of this embodiment, the terminal device acquires the signal quality of the CRS by measuring the CRS, and the measurement result of the CRS is represented by RSRP.

Illustratively, the apparatus for receiving information configures three RSRP threshold values, i.e., RSRP1, RSRP2, and RSRP3, wherein RSRP1 > RSRP2 > RSRP3. When RSRP ≥ RSRP1, the CE level corresponding to the terminal device is the level 0; when RSRP2 ≤ RSRP < RSRP1, the CE level corresponding to the terminal device is the level 1; when RSRP3 ≤ RSRP < RSRP2, the CE level corresponding to the terminal device is the level 2; when RSRP < RSRP3, the reference signal quality is too low, and no corresponding CE level.

In one possible design of this embodiment, in the case of the failure in transmitting the first information, the CE level associated with the last transmission of the first information is the level m, and the third CE level is also the level m, where m can take the value of 0, 1, or 2. For example, if the CE level associated with the last transmission of the first information is the level 1, then the third CE level is also the level 1.

In one possible design of this embodiment, in the case of the failure in transmitting the first information, the third CE level is the CE level acquired by increasing the CE level associated with the last transmission of the first information by one level. For example, if the CE level associated with the last transmission of the first information is the level 1, the third CE level is the level 2; alternatively, the third CE level is acquired by increasing the CE level associated with the last transmission of the first information by two levels, with an upper limit of the level 2. For instance, if the CE level associated with the last transmission of the first information is the level 0, the third CE level is the level 2, or if the CE level associated with the last transmission of the first information is the level 1, the third CE level is the level 2.

When the third CE level is the CE level determined by the terminal device based on the RSRP measurement result and the RSRP threshold configured by the apparatus for receiving information, the third CE level is more consistent with the scenario in which the terminal device is located, with higher accuracy; when the third CE level is the CE level associated with the last transmission of the first information, no RSRP measurement is required, making implementation simple; when the third CE level is the CE level acquired by adding the preset level to the CE level associated with the last transmission of the first information, it is more reasonable and can find a suitable CE level faster.

In one possible design of this embodiment, the first scenario and the second scenario can be combined. Specifically, in the case where the first event occurs, the transmission scheme of the first information is switched from using the PUR transmission to using the pre-configured PUSCH resource of the first type for transmission. Subsequently, in the case where the number of times the terminal device transmits the first information reaches the first transmission count, the transmission scheme of the first information is switched from using the pre-configured PUSCH resource of the first type for transmission to using the pre-configured PUSCH resource of the second type for transmission.

In one possible design of this embodiment, the first scenario and the third scenario can be combined. Specifically, in the case where the number of times the terminal device transmits the first information reaches the first transmission count, the transmission scheme of the first information is switched from using the pre-configured PUSCH resource of the first type for transmission to using the pre-configured PUSCH resource of the second type for transmission. In the case where the second event occurs, the transmission scheme of the first information is switched from using the pre-configured PUSCH resource of the second type for transmission to using the EDT resource.

In one possible design of this embodiment, the second and third scenarios can be combined. Specifically, in the case where the first event occurs, the transmission scheme of the first information is switched from using the PUR transmission to using the pre-configured PUSCH resource for transmission. Subsequently, in the case where the second event occurs, the transmission scheme of the first information is switched from using the pre-configured PUSCH resource for transmission to using the EDT resource for transmission.

The embodiments of the present disclosure do not limit the combination of the above situations, and the specific implementation details are referred to the above embodiments, which will not be further described here.

In this embodiment, the configuration module 1520 can be split into a plurality of configuration modules, such as the first configuration module, the second configuration module, the third configuration module, the fourth configuration module, the fifth configuration module, and the sixth configuration module. The first configuration module is used to configure the first transmission count, the second configuration module is used to configure the first indication signaling, the third configuration module is used to configure the PUR, the fourth configuration module is used to configure the second transmission count, the fifth configuration module is used to configure the second indication signaling, and the sixth configuration module is used to configure the EDT resource; or the first configuration module is used to configure the first indication signaling, the second configuration module is used to configure the PUR, the third configuration module is used to configure the second transmission count, the fourth configuration module is used to configure the second indication signaling, the fifth configuration module is used to configure the EDT resource, and the sixth configuration module is used to configure the first transmission count; or the first configuration module is used to configure the PUR, the second configuration module is used to configure the second transmission count, the third configuration module is used to configure the second indication signaling, the fourth configuration module is used to configure the EDT resource, the fifth configuration module is used to configure the first transmission count, and the sixth configuration module is used to configure the first indication signaling. This embodiment does not limit the functions of different configuration modules.

This embodiment is exemplified by one receiving module 1510 and one configuration module 1520, but the number of receiving modules 1510 and configuration modules 1520 is not limited.

For the introduction of the function of the receiving module 1510, please refer to the contents of steps 1010 and 1020 in the embodiment illustrated in FIG. 10.

For the introduction of the function of the configuration module 1520, please refer to the content of step 1020 in the embodiment illustrated in FIG. 10.

FIG. 16 illustrates a schematic structural diagram of a terminal device according to some embodiments of the present disclosure. The terminal device 1600 can be used to perform the method steps performed by the terminal device in the aforementioned embodiments. The terminal device 1600 may include: a processor 1601, a transceiver 1602, and a memory 1603. The processor 1601 can be used for controlling transmission and/or reception. The transceiver 1602 can be used to implement transmission and/or reception functions, such as implementing the functions of the aforementioned transmission module 1420.

The processor 1601 includes one or more processing cores. By executing software programs and modules, the processor 1601 performs various functional applications and information processing, such as implementing the functions of the aforementioned switching module 1410.

The transceiver 1602 can include a receiver and a transmitter, which can be implemented as a single wireless communication assembly, for example. This wireless communication assembly can include a wireless communication chip and a radio frequency antenna.

The memory 1603 can be connected to the processor 1601 and the transceiver 1602.

The memory 1603 can be used to store a computer program executed by the processor, and the processor 1601 is used to execute the computer program to perform the various steps in the above-mentioned method embodiments.

In addition, the memory 1603 can be implemented by any type of volatile or non-volatile storage device, or a combination thereof. Volatile or non-volatile storage devices include, but are not limited to: magnetic or optical disks, an electrically erasable programmable read-only memory, an erasable programmable read-only memory, a static random access memory, a read-only memory, a magnetic memory, a flash memory, and a programmable read-only memory.

In some embodiments, the processor 1601 is configured to switch the transmission scheme of the first information from the first uplink transmission scheme to the second uplink transmission scheme in the case where the first condition is met; wherein the first uplink transmission scheme or the second uplink transmission scheme includes transmitting using the pre-configured PUSCH resource.

For details not elaborated in this embodiment, please refer to the previous embodiments, and will not be elaborated here.

FIG. 17 illustrates a schematic structural diagram of a network device according to some embodiments of the present disclosure. The network device 1700 can be utilized to execute the method steps performed by the network device in the aforementioned embodiments. The network device 1700 may include: a processor 1701, a transceiver 1702, and a memory 1703. Within this structure, the processor 1701 can be used to control transmission and/or reception. The transceiver 1702 can be used to implement transmission and/or reception functions, such as fulfilling the function of at least one of the aforementioned receiving module 1510 and configuring module 1520.

The processor 1701 includes one or more processing cores, and executes various functional applications and information processing by running software programs and modules.

The transceiver 1702 can include a receiver and a transmitter. For instance, the transceiver 1702 can include a wired communication assembly, which may include a wired communication chip and a wired interface (such as a fiber optic interface). Optionally, the transceiver 1702 can also include a wireless communication assembly, which may include a wireless communication chip and a radio frequency antenna.

The memory 1703 can be connected to the processor 1701 and the transceiver 1702.

The memory 1703 can be used to store a computer program executed by the processor, and the processor 1701 is used to execute the computer program to perform the various steps performed by the network device in the above method embodiments.

In addition, the memory 1703 can be implemented by any type of volatile or non-volatile storage device, or a combination thereof. Volatile or non-volatile storage devices include, but are not limited to: magnetic or optical disks, an electrically erasable programmable read-only memory, an erasable programmable read-only memory, a static random access memory, a read-only memory, a magnetic memory, a flash memory, and a programmable read-only memory.

In some embodiments, the transceiver 1702 is configured to receive the first information transmitted using the first uplink transmission scheme; receive the first information transmitted using the second uplink transmission scheme; wherein the second uplink transmission scheme is the uplink transmission scheme determined by the terminal device in the idle state or the inactive state in the case where the first condition is met, and the first uplink transmission scheme or the second uplink transmission scheme includes: transmitting using the preconfigured PUSCH resource.

For details not elaborated in this embodiment, please refer to the previous embodiments, and will not be elaborated here.

The embodiments of the present disclosure further provide a computer-readable storage medium, in which a computer program is stored. The computer program is configured to be executed by a processor to perform the method for switching transmission schemes on the terminal device as described above, or to perform the method for receiving information on the network device as described above. In some embodiments, the computer-readable storage medium may include: ROM (Read-Only Memory), RAM (Random-Access Memory), SSD (Solid State Drives), or optical discs, etc. The random access memory may include ReRAM (Resistance Random Access Memory) and DRAM (Dynamic Random Access Memory).

The embodiments of the present disclosure also provide a chip, which includes a programmable logic circuit and/or program instructions. When the chip operates, the chip is used to perform the method for switching transmission schemes on the terminal device mentioned above, or to perform the method for receiving information on the network device mentioned above.

The embodiments of the present disclosure further provide a computer program product, which includes a computer program stored in a computer-readable storage medium. The processor reads and executes the computer program from the computer-readable storage medium to perform the method for switching transmission schemes on the terminal device as described above, or to perform the method for receiving information on the network device as described above.

It should be understood that the "indication" mentioned in the embodiments of the present disclosure can be a direct indication, an indirect indication, or even indicate an association. For example, A indicating B can mean that A directly indicates B, such that B can be acquired through A; it can also mean that A indirectly indicates B, such as A indicating C, and B can be acquired through C; it can also mean that there is an association between A and B.

In the description of embodiments of the present disclosure, the term "corresponding" indicates a direct or indirect corresponding relationship between two items, or indicates an associated relationship between two items; and also indicates relationships such as indicating and being indicated, or configuring and being configured.

In some embodiments of the present disclosure, "predefined" can be implemented by pre-storing corresponding codes, tables, or other means that can be used to indicate relevant information in devices (e.g., including the terminal device and the network device). The specific implementation method is not limited in the present disclosure. For example, predefined can refer to what is defined in a protocol.

In some embodiments of the present disclosure, the term "protocol" refers to a standard or a protocol in the communication field, including, for example, the LTE protocol, the NR protocol, and related protocols applied in the future communication systems, which is not limited in the present disclosure.

In this document, "a plurality" refers to two or more. "And/or" describes the association relationship between associated objects, indicating that there can be three types of relationships. For example, A and/or B can represent three situations: A exists alone, A and B exist simultaneously, and B exists alone. The character "/" generally indicates that the relationship between the preceding and following associated objects is an "or" relationship.

The term "greater than or equal to" mentioned in this article can signify either greater than or equal to, or simply greater than; similarly, "less than or equal to" can signify either less than or equal to, or simply less than.

In addition, the step numbers described in the present disclosure only exemplarily illustrate one possible execution sequence among steps. In some other embodiments, the aforementioned steps may not be performed in numerical order. For instance, two steps with different numbers may be performed simultaneously, or two steps with different numbers may be performed in an order opposite to that illustrated in the diagram. The embodiments of the present disclosure do not impose any restrictions on this.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A method for switching transmission schemes, performed by a terminal device in an idle state or an inactive state, the method comprising:
in a case where a first condition is met, switching a transmission scheme of first information from a first uplink transmission scheme to a second uplink transmission scheme;
wherein the first uplink transmission scheme or the second uplink transmission scheme comprises: transmitting using a pre-configured physical uplink shared channel (PUSCH) resource.

2. The method according to claim 1, wherein the first uplink transmission scheme comprises transmitting using a pre-configured PUSCH resource of a first type; and the second uplink transmission scheme comprises transmitting using a pre-configured PUSCH resource of a second type.

3. The method according to claim 2, wherein the first condition comprises: a number of times the terminal device transmits the first information reaches a first transmission count, wherein the first transmission count is a maximum transmission attempt count corresponding to the PUSCH resource of the first type.

4. The method according to claim 2 or 3, wherein a first repetition number is less than a second repetition number, wherein the first repetition number is a repetition number corresponding to the PUSCH resource of the first type, and the second repetition number is a repetition number corresponding to the PUSCH resource of the second type.

5. The method according to any one of claims 2 to 4, further comprising:
retransmitting the first information in a case of failure in transmitting the first information using the pre-configured PUSCH resource of the first type.

6. The method according to claim 5, further comprising:
in a case of failure in an i^{th} retransmission, performing an (i+1)^{th} retransmission until a transmission count of the first information reaches a first transmission count;
wherein the first transmission count is a maximum transmission attempt count corresponding to the PUSCH resource of the first type, and i is a positive integer.

7. The method according to claim 3 or 6, wherein the first transmission count is configured by a network device.

8. The method according to any one of claims 2 to 7, wherein the PUSCH resource of the first type is associated with a first coverage enhancement (CE) level, and the PUSCH resource of the second type is associated with a second CE level.

9. The method according to claim 8, wherein the first CE level is a CE level determined by the terminal device based on a reference signal received power (RSRP) measurement result and an RSRP threshold configured by the network device; or the first CE level is a CE level specified by the network device during a radio resource control (RRC) connection release.

10. The method according to claim 8, wherein the second CE level is a CE level acquired by adding a preset level to the first CE level; or the second CE level is a CE level determined by the terminal device based on an RSRP measurement result and an RSRP threshold configured by the network device.

11. The method according to claim 5, wherein a first timer is a timer initiated by the terminal device when transmitting the first information using the PUSCH resource of the first type, and the first timer is used to limit time for transmitting the first information; and
retransmitting the first information in the case of failure in transmitting the first information using the pre-configured PUSCH resource of the first type comprises: retransmitting the first information in a case where the first timer expires.

12. The method according to claim 1, wherein the first uplink transmission scheme comprises using a pre-configured uplink resource (PUR) transmission; and the second uplink transmission scheme comprises transmitting using the pre-configured PUSCH resource.

13. The method according to claim 12, wherein the first condition comprises: occurrence of a first event.

14. The method according to claim 13, wherein the first event comprises at least one of:
a second timer expires; a network device indicates that the PUR transmission fails; the network device indicates that the PUR transmission terminates; wherein the second timer is used to limit time of the PUR transmission.

15. The method according to claim 13 or 14, wherein a second timer is a timer initiated by the terminal device when using the PUR transmission, and the second timer is used to limit time of the PUR transmission.

16. The method according to claim 1, wherein the first uplink transmission scheme comprises transmitting using the preconfigured PUSCH resource; and the second uplink transmission scheme comprises transmitting using an early data transmission (EDT) resource.

17. The method according to claim 16, wherein the first condition comprises: occurrence of a second event.

18. The method according to claim 17, wherein the second event comprises at least one of:
a third timer expires; a network device indicates that transmission of the first information fails; the network device indicates that the transmission of the first information terminates; a number of times the first information has been transmitted reaches a second transmission count;
wherein the third timer is used to limit time for transmitting the first information, and the second transmission count is a maximum transmission attempt count corresponding to the PUSCH resource.

19. The method according to claim 18, wherein the second transmission count is configured by the network device.

20. The method according to any one of claims 16 to 19, wherein a third timer is a timer initiated by the terminal device when transmitting the first information using the pre-configured PUSCH resource, and the third timer is used to limit time for transmitting the first information.

21. The method according to any one of claims 16 to 20, wherein the EDT resource is associated with a third CE level.

22. The method according to claim 21, wherein the third CE level is a CE level determined by the terminal device based on an RSRP measurement result and an RSRP threshold configured by a network device; or, the third CE level is a CE level associated with a last transmission of the first information in a case of failure in transmitting the first information; or, the third CE level is a CE level acquired by adding a preset level to the CE level associated with the last transmission of the first information in the case of failure in transmitting the first information.

23. The method according to any one of claims 1 to 22, wherein the first information comprises first signaling; or the first information comprises both first signaling and first data.

24. The method according to claim 23, wherein the first signaling comprises at least one of an RRC connection establishment request, an RRC connection resume request, an early data request.

25. The method according to any one of claims 1 to 24, wherein the PUSCH resource is a contention-based PUSCH resource.

26. A method for receiving information, performed by a network device, the method comprising:
receiving first information transmitted using a first uplink transmission scheme; receiving the first information transmitted using a second uplink transmission scheme;
wherein the second uplink transmission scheme is an uplink transmission scheme determined by a terminal device in an idle state or an inactive state in a case where the first condition is met, and the first uplink transmission scheme or the second uplink transmission scheme comprises: transmission using a pre-configured physical uplink shared channel (PUSCH) resource.

27. The method according to claim 26, wherein the first uplink transmission scheme comprises transmitting using a pre-configured PUSCH resource of a first type; and the second uplink transmission scheme comprises transmitting using a pre-configured PUSCH resource of a second type.

28. The method according to claim 27, wherein the first condition comprises: a number of times the terminal device transmits the first information reaches a first transmission count, wherein the first transmission count is a maximum transmission attempt count corresponding to the PUSCH resource of the first type.

29. The method according to claim 28, wherein a first repetition number is less than a second repetition number, wherein the first repetition number is a repetition number corresponding to the PUSCH resource of the first type, and the second repetition number is a repetition number corresponding to the PUSCH resource of the second type.

30. The method according to any one of claims 27 to 29, further comprising:
configuring a first transmission count, wherein the first transmission count is a maximum transmission attempt count corresponding to the PUSCH resource of the first type.

31. The method according to any one of claims 27 to 30, wherein the PUSCH resource of the first type of is associated with a first coverage enhancement (CE) level, and the PUSCH resource of the second type is associated with a second CE level.

32. The method according to claim 31, wherein the first CE level is a CE level determined by the terminal device based on a reference signal received power (RSRP) measurement result and an RSRP threshold configured by the network device; or the first CE level is a CE level specified by the network device during a radio resource control (RRC) connection release.

33. The method according to claim 31 or 32, wherein the second CE level is a CE level acquired by adding a preset level to the first CE level; or the second CE level is a CE level determined by the terminal device based on an RSRP measurement result and an RSRP threshold configured by the network device.

34. The method according to claim 26, wherein the first uplink transmission scheme comprises a preconfigured uplink resource (PUR) transmission; and the second uplink transmission scheme comprises transmitting using the preconfigured PUSCH resource.

35. The method according to claim 34, wherein the first condition comprises: occurrence of a first event.

36. The method according to claim 35, wherein the first event comprises at least one of:
a second timer expires; the network device indicates that the PUR transmission fails; the network device indicates that the PUR transmission terminates; wherein the second timer is used to limit time for the PUR transmission.

37. The method according to claim 36, wherein the second timer is a timer initiated by the terminal device when using the PUR transmission.

38. The method according to any one of claims 34 to 37, further comprising:
configuring first indication signaling, wherein the first indication signaling is used to indicate that the PUR transmission fails or terminates.

39. The method according to any one of claims 34 to 38, further comprising:
configuring PUR, wherein the PUR is used for PUR transmission by the terminal device.

40. The method according to claim 26, wherein the first uplink transmission scheme comprises transmitting using the pre-configured PUSCH resource; and the second uplink transmission scheme comprises transmitting using an early data transmission (EDT) resource.

41. The method according to claim 40, wherein the first condition comprises: occurrence of a second event.

42. The method according to claim 41, wherein the second event comprises at least one of:
a third timer expires; the network device indicates that transmission of the first information fails; the network device indicates that the transmission of the first information terminates; a number of times the first information has been transmitted reaches a second transmission count;
wherein the third timer is used to limit time for the terminal device to transmit the first information, and the second transmission count is a maximum transmission attempt count corresponding to the PUSCH resource.

43. The method according to claim 42, wherein the third timer is a timer initiated by the terminal device when transmitting the first information using the pre-configured PUSCH resource.

44. The method according to any one of claims 40 to 43, further comprising:
configuring second transmission count, wherein the second transmission count is a maximum transmission attempt count corresponding to the PUSCH resource.

45. The method according to any one of claims 40 to 44, further comprising:
configuring second indication signaling, wherein the second indication signaling is used to indicate transmission of the first information fails or terminates.

46. The method according to any one of claims 40 to 45, further comprising:
configuring an EDT resource, wherein the EDT resource is associated with a third CE level.

47. The method according to claim 46, wherein the third CE level is a CE level determined by the terminal device based on an RSRP measurement result and an RSRP threshold configured by a network device; or, the third CE level is a CE level associated with a last transmission of the first information in a case where the terminal device fails to transmit the first information; or, the third CE level is a CE level acquired by adding a preset level to the CE level associated with the last transmission of the first information in the case where the terminal device fails to transmit the first information.

48. The method according to any one of claims 26 to 47, wherein the first information comprises a first signaling; or the first information comprises both first signaling and first data.

49. The method according to claim 48, wherein the first signaling comprises at least one of an RRC connection establishment request, an RRC connection resume request, an early data request.

50. The method according to any one of claims 26 to 49, wherein the PUSCH resource is a contention-based PUSCH resource.

51. An apparatus for switching transmission schemes, comprising:
a switching module, configured to switch a transmission scheme of first information from a first uplink transmission scheme to a second uplink transmission scheme in a case where a first condition is met;
wherein the first uplink transmission scheme or the second uplink transmission scheme comprises: transmitting using a pre-configured physical uplink shared channel (PUSCH) resource.

52. An apparatus for receiving information, comprising:
a receiving module, configured to receive first information transmitted using a first uplink transmission scheme; receive the first information transmitted using a second uplink transmission scheme;
wherein the second uplink transmission scheme is an uplink transmission scheme determined by a terminal device in an idle state or an inactive state in a case where a first condition is met, and the first uplink transmission scheme or the second uplink transmission scheme comprises: transmitting using a pre-configured physical uplink shared channel (PUSCH) resource.

53. A terminal device, comprising:
a processor; a transceiver connected to the processor; a memory for storing executable instructions of the processor;
wherein the processor is configured to load and execute the executable instructions to perform the method for switching transmission schemes according to any one of claims 1 to 25.

54. A network device, comprising:
a processor; a transceiver connected to the processor; a memory for storing executable instructions of the processor;
wherein the processor is configured to load and execute the executable instructions to perform the method for receiving information as claimed in any one of claims 26 to 50.

55. A computer-readable storage medium, wherein at least one program is stored in the computer-readable storage medium, and the at least one program is loaded and executed by a processor to perform the method for switching transmission schemes according to any one of claims 1 to 25, or the method for receiving information according to any one of claims 26 to 50.

56. A chip, wherein the chip comprises a programmable logic circuit and/or program instructions, and when the chip operates on a terminal device or network device, the chip is used to perform the method for switching transmission schemes according to any one of claims 1 to 25, or the method for receiving information according to any one of claims 26 to 50.

57. A computer program product, wherein the computer program product comprises computer instructions stored in a computer-readable storage medium, a processor acquires the computer instructions from the computer-readable storage medium, and the processor executes the computer instructions to perform the method for switching transmission schemes according to any one of claims 1 to 25, or the method for receiving information according to any one of claims 26 to 50.
